# EUROPÄISCHE PATENTSCHRIFT

(11) **EP 0 694 053 B1**
(45) Veröffentlichungstag und Bekanntmachung des Hinweises auf die Patenterteilung: **22.07.1998**
(21) Anmeldenummer: 94913601.4
(22) Anmeldetag: 14.04.1994
(51) Int. Cl.: C09B 62/04

(54) **WASSERLÖSLICHE FASERREAKTIVE FARBSTOFFE, VERFAHREN ZU IHRER HERSTELLUNG UND IHRE VERWENDUNG**
WATER-SOLUBLE FIBER-REACTIVE DYES, PROCESS FOR PRODUCING THE SAME AND THEIR USE
COLORANTS SOLUBLES DANS L'EAU REAGISSANT AVEC DES FIBRES, LEUR PROCEDE DE PREPARATION ET LEUR UTILISATION

(30) Priorität: 14.04.1993 DE 4312176; 14.10.1993 DE 4335009
(43) Veröffentlichungstag der Anmeldung: 31.01.1996
(73) Patentinhaber: DyStar Textilfarben GmbH & Co. Deutschland KG, 60318 Frankfurt am Main (DE)
(72) Erfinder: DANNHEIM, Jörg, D-60489 Frankfurt am Main (DE); HÄHNLE, Reinhard, D-61462 Königstein im Taunus (DE)
(86) Internationale Anmeldenummer: EP9401160
(87) Internationale Veröffentlichungsnummer: WO9424214

(56) Entgegenhaltungen:
- JP-A-57 199 878

## Beschreibung

Die Erfindung liegt auf dem technischen Gebiet der faserreaktiven Farbstoffe.

Aus der japanischen Patentanmeldungs-Veröffentlichung Sho-57-199 878 sind Farbstoffe bekannt, die Cyanoamino-, N-Cyano-benzamido- und N-Cyano-sulfonamido-Gruppen enthalten. Sie besitzen jedoch teilweise anwendungstechnische Mängel, wie niedrige Fixiergrade, niedrige Farbstärke und fehlende Brillanz.

Mit der vorliegenden Erfindung wurden nunmehr neue faserreaktive Farbstoffe der allgemeinen Formel (1) 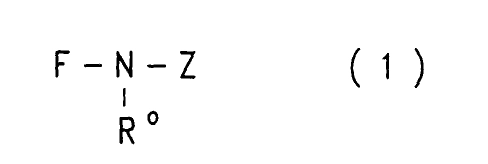 der nachstehend angegebenen Bedeutung gefunden, die sich gegenüber den bekannten Farbstoffen vorteilhaft unterscheiden und Färbungen und Drucke mit hoher Farbstärke in brillanten Tönen liefern.

In Formel (1) bedeuten:
- F-N(R°)-Z: ist ein Farbstoff der allgemeinen Formel (1A), (1B), (1C), (1D), (1E), (1F), (1G), (1H), (1J), (1K), (1M) oder (1N)
in welcher
- D⁰: Monosulfo-, Disulfo- oder Trisulfo-naphth-2-yl ist,
- R¹: Ureido oder Alkanoylamino von 2 bis 5 C-Atomen, wie Propionylamino und insbesondere Acetylamino, ist und
- Z: ein Rest der allgemeinen Formel (2) 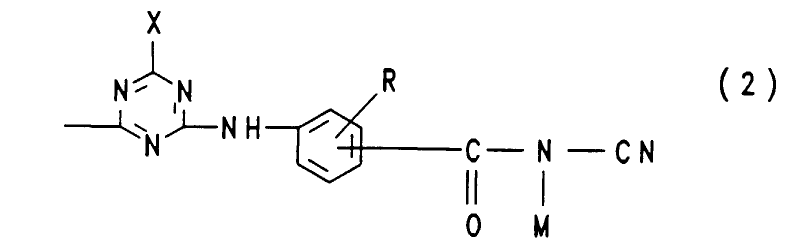 ist, in welcher
- X: für Fluor oder Chlor steht,
- R: Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, ist und
- M: Wasserstoff oder ein Alkalimetall, wie Natrium, Lithium oder Kalium, ist; 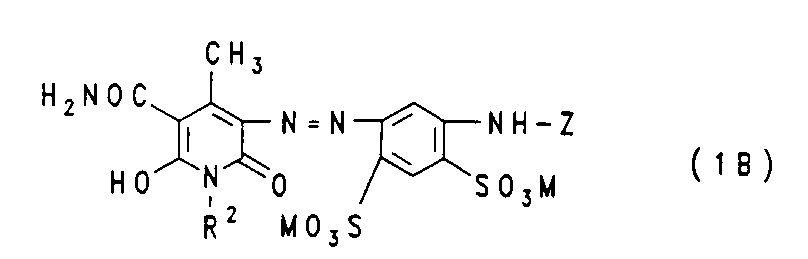 in welcher
- M und Z: die obengenannten Bedeutungen haben und
- R²: Alkyl von 1 bis 4 C-Atomen, wie insbesondere Ethyl, ist; 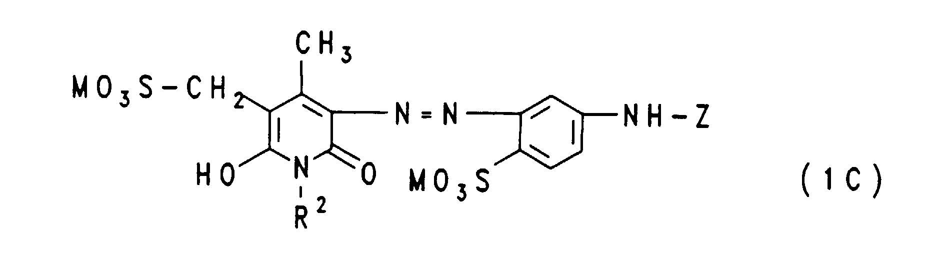 in welcher M und R² die obengenannten Bedeutungen haben und Z ein Rest der oben angegebenen allgemeinen Formel (2) ist, in welcher M und R die angegebenen Bedeutungen haben und X für Chlor steht; 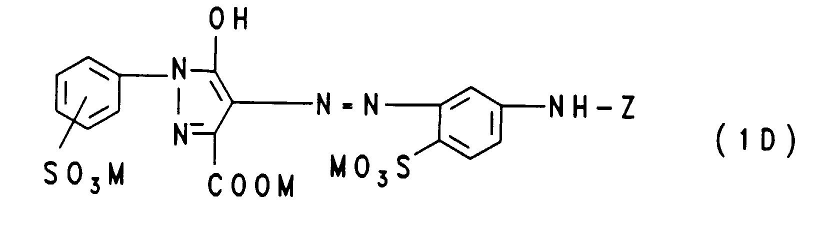 in welcher M die obengenannte Bedeutung besitzt und Z ein Rest der oben angegebenen allgemeinen Formel (2) ist, worin M und R die obengenannten Bedeutungen haben und X für Chlor steht; 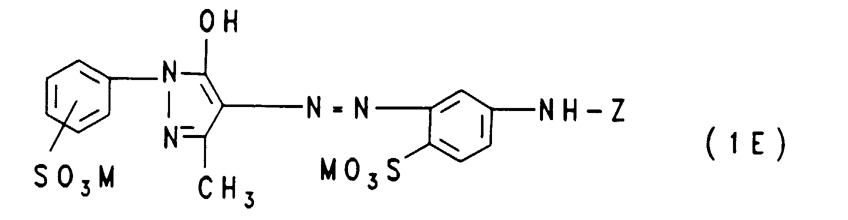 in welcher M die obengenannte Bedeutung besitzt und Z ein Rest der oben angegebenen allgemeinen Formel (2) ist, worin M und R die obengenannten Bedeutungen haben und X für Fluor steht; 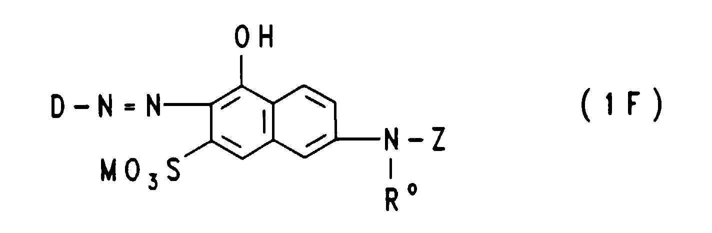 in welcher
- M und Z: die anfangs genannten Bedeutungen haben,
- D: der 2-Sulfo-phenyl-Rest ist, der durch ein Alkyl von 1 bis 4 C-Atomen, wie Ethyl und insbesondere Methyl, oder durch ein Alkoxy von 1 bis 4 C-Atomen, wie Ethoxy und insbesondere Methoxy, substituiert sein kann, oder ein 1-Sulfo-naphth-2-yl-Rest ist, der noch durch 1 oder 2 Sulfogruppen substituiert sein kann, und
- R⁰: Wasserstoff oder Alkyl von 1 bis 4 C-Atomen, wie Ethyl und insbesondere Methyl, ist; 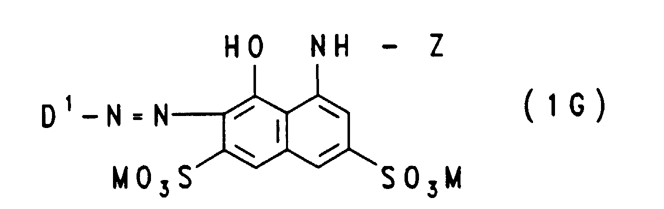 in welcher
- M und Z: die anfangs genannten Bedeutungen haben und
- D¹: ein 1-Sulfo-naphth-2-yl-Rest ist, der noch durch 1 oder 2 Sulfogruppen substituiert sein kann; 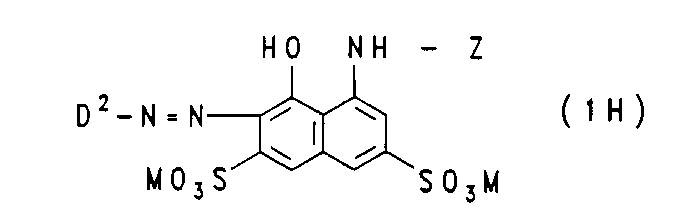 in welcher
- D²: der 2-Sulfo-phenyl-Rest ist,
- M: die obengenannte Bedeutung besitzt und
- Z: ein Rest der obengenannten allgemeinen Formel (2) ist, in welcher M und R die obengenannten Bedeutungen haben und X für Chlor steht; 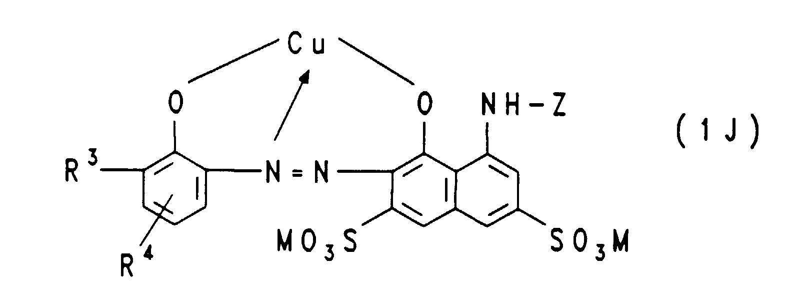 in welcher
- M: die obengenannte Bedeutung besitzt,
- R³: Wasserstoff oder Chlor ist,
- R⁴: Wasserstoff oder Sulfo ist und
- Z: ein Rest der oben angegebenen allgemeinen Formel (2) ist, ir welcher M und R die obengenannten Bedeutungen haben und X für Chlor steht; 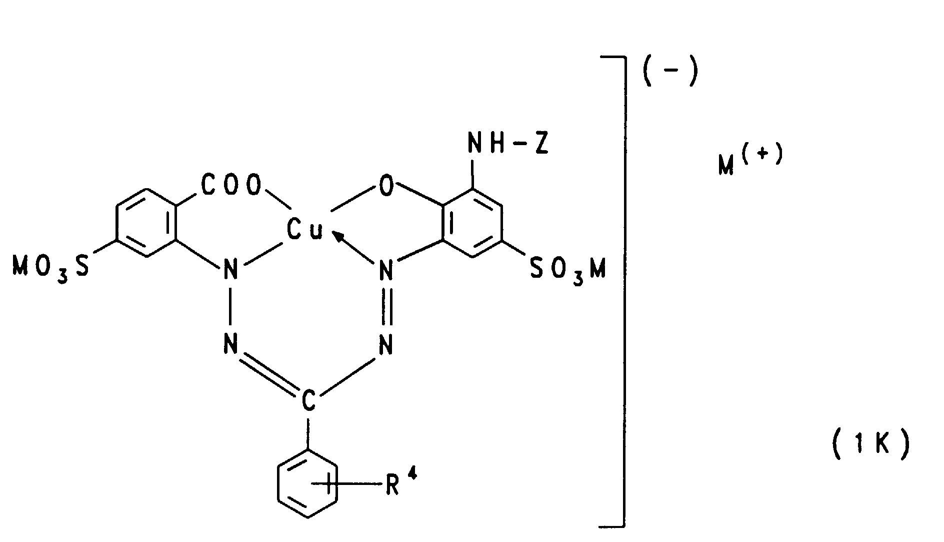 in welcher M und Z die anfangs genannten Bedeutungen haben und R⁴ Wasserstoff oder Sulfo ist; 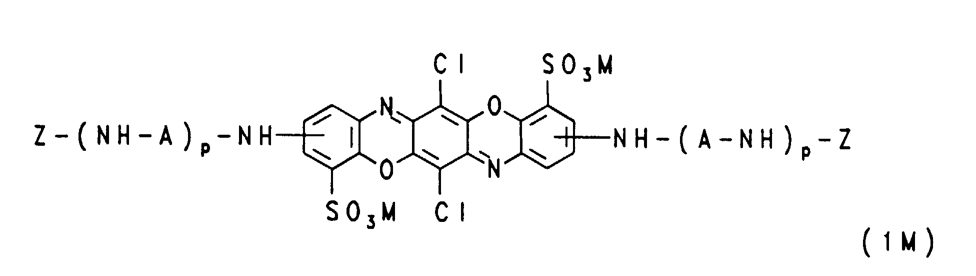 in welcher
- M, A und Z: die obengenannten Bedeutungen haben und
- p: für die Zahl Null oder 1 steht; 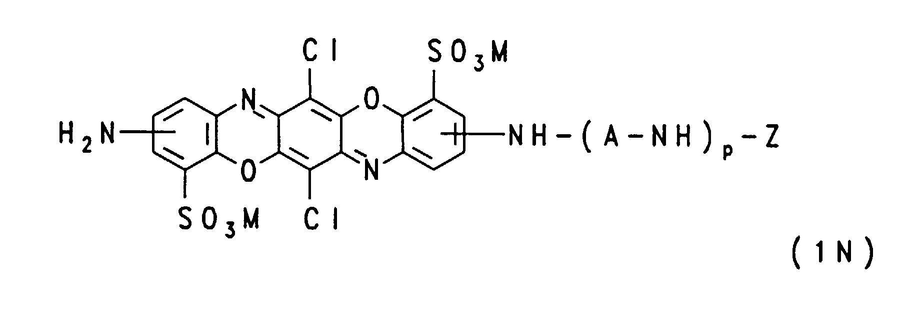 in welcher
- M, A und p: die obengenannten Bedeutungen haben und
- Z: ein Rest der oben angegebenen allgemeinen Formel (2) ist, in welcher M und R die obengenannten Bedeutungen haben und X für Fluor steht.

Die Gruppe "Sulfo" schließt sowohl deren Säureform als auch deren Salzform ein. Demgemäß bedeuten Sulfogruppen Gruppen entsprechend der allgemeinen Formel -SO₃M mit M der obengenannten Bedeutung.

Reste D⁰ sind beispielsweise 5 Sulfo-naphth-2-yl, 6-Sulfo-naphth-2-yl, 8-Sulfo-naphth-2-yl, 3, 6,8-Trisulfo-naphth-2-yl, 1,5,7-Trisulfo-naphth-2-yl, 1,7-Disulfonaphth-2-yl, 5,7-Disulfo-naphth-2-yl, 4,6,8-Trisulfo-naphth-2-yl, 6,8-Disulfonaphth-2-yl, 1,6-Disulfo-naphth-2-yl, 1-Sulfo-naphth-2-yl, 1,5-Disulfo-naphth-2-yl, 3,6-Disulfo-naphth-2-yl und 4,8-Disulfo-naphth-2-yl.
Reste D und D¹ sind beispielsweise neben dem angegebenen 1-Sulfo-naphth-2-yl-Rest bzw. 2-Sulfo-phenyl-Rest auch die Reste 2-Sulfo-5-methyl-phenyl, 2-Sulfo-4-methoxy-phenyl, 2-Sulfo-4-methyl-phenyl, 2-Sulfo-5-methoxy-phenyl, 1,5,7-Trisulfo-naphth-2-yl, 1,7-Disulfo-naphth-2-yl, 1,6-Disulfo-naphth-2-yl und 1,5-Disulfo-naphth-2-yl.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel -N(R⁰)-Z enthält, miteinander umsetzt, oder indem man von einer aminogruppenhaltigen Ausgangsverbindung der allgemeinen Formel (20) 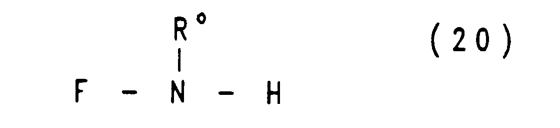 in welcher F-N(R⁰)- die Bedeutung der jedoch vom Rest Z freien allgemeinen Formel (1) besitzt, ausgeht und diese mit einer Halogen-triazin-Verbindung der allgemeinen Formel (21) 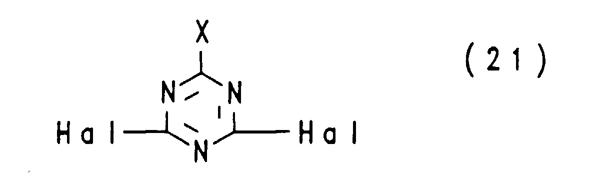 in welcher X die obengenannte Bedeutung besitzt und Hal für Chlor oder Fluor
steht, wie beispielsweise 2,4,6-Trifluor-1,3,5-triazin (Cyanurfluorid) oder 2,4,6-Trichlor-1,3,5-triazin (Cyanurchlorid), und mit einer Aminoverbindung der allgemeinen Formel (22)

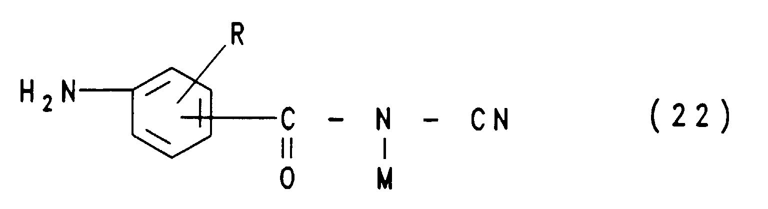

in welcher R und M die obengenannten Bedeutungen haben, in beliebiger Reihenfolge miteinander umsetzt.

Erfindungsgemäße Verfahrensvarianten dieser erfindungsgemäßen Verfahrensweise sind beispielsweise dadurch gekennzeichnet, daß man eine Verbindung der allgemeinen Formel (23) 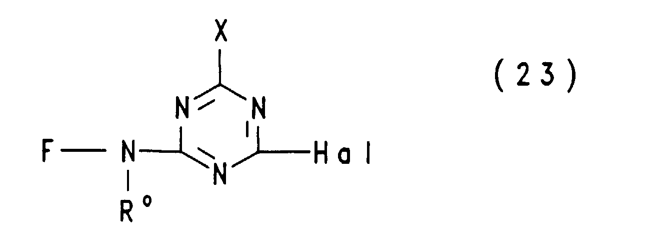 in welcher der Rest F-N(R⁰)- sowie X und Hal die obengenannten Bedeutungen haben, mit einer Aminoverbindung der allgemeinen Formel (22) umsetzt, oder daß man eine Verbindung der allgemeinen Formel (24) 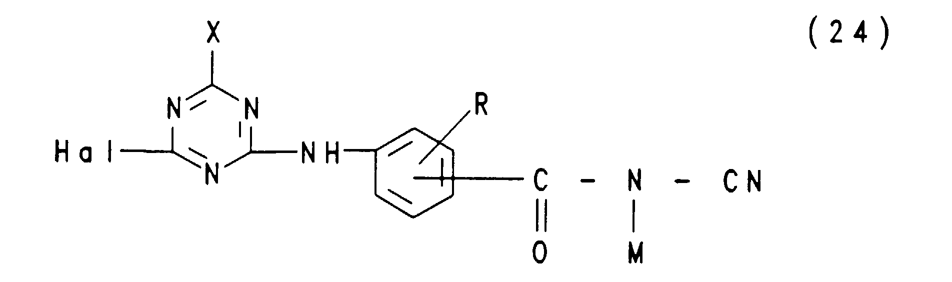 in welcher Hal, X, R und M die obengenannten Bedeutungen haben, mit einer Verbindung der allgemeinen Formel (20) der obengenannten Bedeutung umsetzt. Hiervon ist die Verfahrensweise der Umsetzung einer Verbindung der allgemeinen Formel (23) mit einer Verbindung der allgemeinen Formel (22) bevorzugt.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methylpyrrolidon. Vorteilhaft wird der bei der Kondensation freiwerdende Halogenwasserstoff laufend durch Zugabe wäßriger Alkalihydroxide, -carbonate oder -bicarbonate neutralisiert. Die erste Kondensationsreaktion des Halogen-s-triazins der allgemeinen Formel (21) erfolgt in der Regel bei einer Temperatur zwischen -5°C und + 20°C, im Falle von Hal gleich Fluor bevorzugt bei einer Temperatur zwischen -5°C und + 5°C, und bei einem pH-Wert zwischen 2 und 10, bevorzugt zwischen 4 und 6. Die nachfolgende Kondensationsreaktion mit der zweiten Aminoverbindung erfolgt in der Regel bei einer Temperatur zwischen 0 und 40°C, im Falle von Hal gleich Fluor bevorzugt bei einer Temperatur zwischen 0 und 20°C, und bei einem pH-Wert zwischen 3 und 9, bevorzugt zwischen 6 und 7.

Insbesondere erfolgt die Umsetzung zwischen einer Verbindung der allgemeinen Formel (23) und einer Verbindung der allgemeinen Formel (22) bei einer Temperatur zwischen 0 und 40°C, bevorzugt zwischen 10 und 30°C, und bei einem pH-Wert zwischen 3 und 9, bevorzugt zwischen 6 und 7, wobei man im Falle, daß in der Verbindung der Formel (23) Hal ein Fluoratom ist, die Umsetzung bevorzugt bei einer Temperatur zwischen 0 und 20°C durchführt.

Ebenfalls erfolgt die Umsetzung einer Verbindung der allgemeinen Formel (24) mit einer Verbindung der allgemeinen Formel (20) bei einer Temperatur zwischen 0 und 40°C, bevorzugt zwischen 10 und 30°C, und bei einem pH-Wert zwischen 3 und 9, bevorzugt zwischen 4 und 6, wobei im Falle des Einsatzes einer Verbindung der allgemeinen Formel (24) mit Hal gleich Fluor bevorzugt die Umsetzung bei einer Temperatur zwischen 0 und 20°C durchgeführt wird.

Die Ausgangsverbindungen der allgemeinen Formel (23) lassen sich, ausgehend von den Verbindungen (20), in an und für sich bekannter Verfahrensweise der Umsetzung von halogensubstituierten Triazinen mit aminogruppenhaltigen Verbindungen herstellen, wie dies beispielsweise oben für die erfindungsgemäßen Verfahrensweisen beschrieben ist, so ebenfalls in wäßrigem oder wäßrig-organischem Medium in der Regel bei einer Temperatur zwischen -5°C und +40°C, bevorzugt zwischen 0 und 30°C, und bei einem pH-Wert zwischen 2 und 10, bevorzugt zwischen 5 und 7, wobei man im Falle einer Ausgangsverbindung der Formel (21) mit Hal gleich Fluor bevorzugt eine Reaktionstemperatur zwischen -5°C und + 5°C wählt. In gleicher Weise und unter den gleichen Verfahrensbedingungen lassen sich die Ausgangsverbindungen der allgemeinen Formel (24) durch Umsetzung einer Verbindung der allgemeinen Formel (21) mit einer Verbindung der allgemeinen Formel (22) herstellen.

Die Ausgangsverbindungen der allgemeinen Formel (21) und der allgemeinen Formel (20) sind allgemein bekannt und in der Literatur zahlreich beschrieben. Verbindungen der allgemeinen Formel (21) sind beispielsweise Cyanurchlorid und Cyanurfluorid.

Die Ausgangsverbindungen der allgemeinen Formel (22), die teilweise bekannt sind (s. J. Org. Chem. 31, 959 (1966)), lassen sich analog der Verfahrensweise der Herstellung der bekannten Verbindungen synthetisieren. So kann man von den entsprechenden Nitrobenzol-carbonsäurechlorid-Verbindungen ausgehen, die man mit Cyanamid oder mit einem Salz des Cyanamids in wäßriger Lösung oder Suspension bei einer Temperatur zwischen 0 und 20°C und unter Einhaltung eines pH-Wertes zwischen 7 und 11 in die entsprechende Cyanoaminocarbonyl-nitrobenzol-Verbindung überführt, (s. J. Org. Chem., loc. cit., und Chem. Ind. (London) 1963, 1559); diese Nitroverbindung wird sodann in üblicher Weise, beispielsweise katalytisch in wäßriger Lösung oder Suspension, zur Aminobenzolverbindung reduziert.

Ausgangsverbindungen der allgemeinen Formel (22) sind beispielsweise 2-Amino-N'-cyanobenzamid, 3-Amino-N'-cyanobenzamid, 4-Amino-N'-cyanobenzamid, 3-Amino-4-methoxy-N'-cyanobenzamid und 3-Methyl-4-amino-N'-cyanobenzamid. Bevorzugt hiervon sind insbesondere das 3- und das 4-Amino-N-cyanobenzamid.

Geht man bei der erfindungsgemäßen Synthese der Azofarbstoffe von Diazo-oder Kupplungskomponenten aus, die bereits die Gruppe der allgemeinen Formel -N(R⁰)-Z enthalten, erfolgen die Umsetzungen in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Kupferkomplex-Azofarbstoffen der allgemeinen Formel (1J) geht man beispielsweise von der entsprechenden metallfreien o,o'-Dihydroxy-azo-Ausgangsverbindung aus, die die freie Aminogruppe enthält, die mit dem Halogen-triazin-Rest nach der Kupferungsreaktion umgesetzt werden kann. Die Kupferungsreaktion selbst erfolgt nach den bekannten üblichen Verfahrensweisen mit einem kupferabgebenden Mittel, wie einem Kupfersalz, wie beispielsweise Kupferchlorid oder Kupfersulfat.

Die Abscheidung der erfindungsgemäß hergestellten Farbstoffe der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugefügt werden kann. Sie haben faserreaktive Eigenschaften und besitzen sehr gute Farbstoffeigenschaften. Sie können deshalb zum Färben und Bedrucken von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz, gegebenenfalls nach Konzentrierung, direkt als Flüssigpräparation der färberischen Verwendung zugeführt werden.

Die Farbstoffe der allgemeinen Formel (1) - im nachfolgenden Farbstoffe (1) genannt - eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Ebenso sind die erfindungsgemäßen Farbstoffe für das sogenannte Kaltverweilverfahren geeignet, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich Bedrucken) dieser Materialien bzw. Verfahren zum Färben solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die erfindungsgemäßen fluortriazinhaltigen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemäßen chlortriazinhaltigen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Eine neutrale Lösung von 17,8 Teilen der Verbindung 5-(2'-Sulfo-5'-amino-phenyl)-azo-1-N-ethyl-3-sulfomethyl-4-methyl-6-hydroxy-pyrid-2-on in 300 Teilen Wasser wird bei 0°C unter Einhaltung eines pH-Wertes von 4 mit 7,4 Teilen Cyanurchlorid versetzt und bis zur Beendigung der Umsetzung bei dieser Temperatur und dem pH-Wert weitergerührt. Danach werden 6,44 Teile 4-Amino-N'-cyanobenzamid zugegeben und der pH-Wert während der etwa vierstündigen Umsetzung bei 30°C bei 6,5 gehalten.

Die erfindungsgemäße Azoverbindung, die in Form der freien Säure die Formel 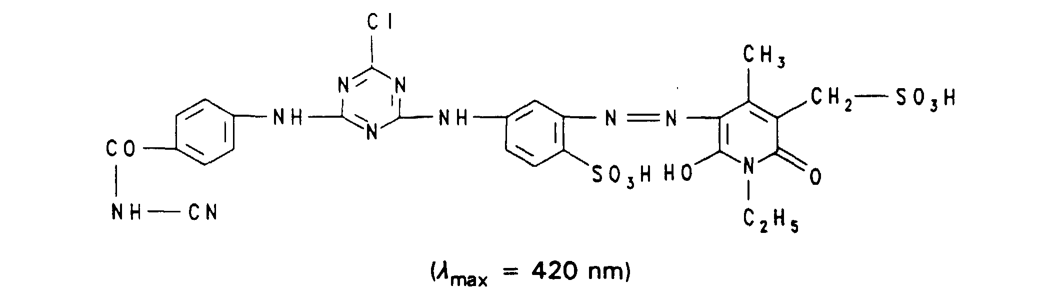 besitzt, wird durch Zugabe von Natriumchlorid ausgesalzen und isoliert. Sie besitzt sehr gute Farbstoffeigenschaften und liefert nach den in der Technik für faserreaktive Farbstoffe üblichen Anwendungs- und Fixiermethoden auf den in der Beschreibung genannten Materialien, insbesondere Cellulosefasermaterialien, wie Baumwolle, brillante, grünstichig gelbe Färbungen mit guten Echtheiten, von denen insbesondere die guten Chlor- und Lichtechtheiten hervorgehoben werden können.

### Beispiel 2

Eine neutrale Lösung von 10,7 Teilen 1,3-Diaminobenzol-4,6-disulfonsäure in 200 Teilen Wasser werden unter Einhaltung eines pH-Wertes von 4 bei 0°C mit 7,5 Teilen Cyanurchlorid versetzt. Temperatur und pH-Wert werden während der Umsetzung gehalten, die nach etwa 3 Stunden beendet ist. Danach werden 6,44 Teile 4-Amino-N'-cyanobenzamid hinzugegeben und die Umsetzung bei einem pH-Wert von 6 und einer Temperatur von 20°C durchgeführt. Anschließend wird das erhaltene Produkt in bekannter Weise diazotiert und das erhaltene Diazoniumsalz mit 7,8 Teilen 1-N-Ethyl-3-carbamoyl-4-methyl-6-hydroxy-pyrid-2-on bei einem pH-Wert von 5,5 und einer Temperatur von etwa 15°C gekuppelt,

Die erhaltene erfindungsgemäße Azoverbindung wird durch Aussalzen mit Natriumchlorid isoliert. Sie besitzt, in Form der freien Säure geschrieben, die Formel 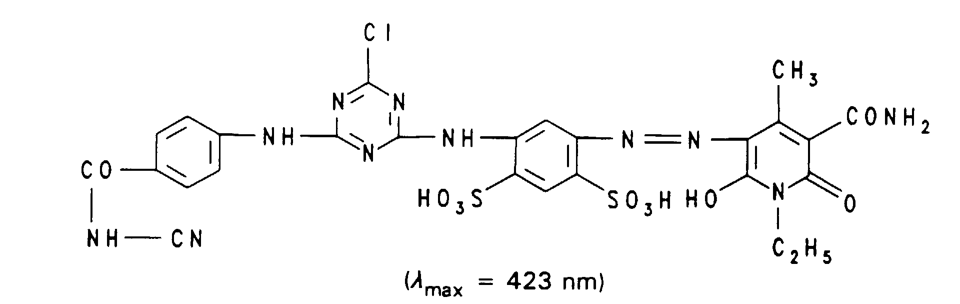 und färbt beispielsweise Baumwolle in brillanten, grünstichig gelben Tönen mit guten Echtheitseigenschaften.

### Beispiele 3 bis 13

In den nachfolgenden Tabellenbeispielen sind weitere erfindungsgemäße Azofarbstoffe mit Hilfe der Komponenten entsprechend der allgemeinen Formel (A) 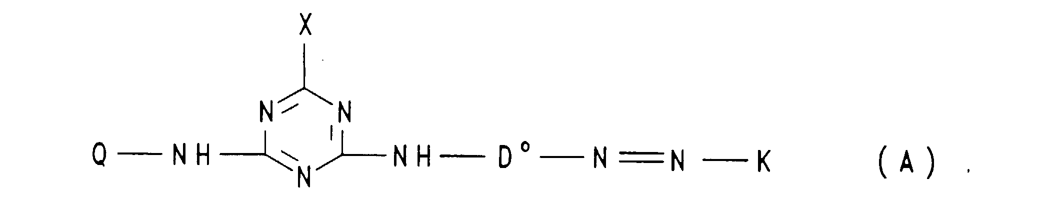 beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diaminoverbindung der Formel H₂N-D⁰-NH₂, Cyanurfluorid oder Cyanurchlorid, der Amino-N'-cyanobenzamid-Verbindung der Formel H₂N-Q und der Kupplungskomponente H-K) herstellen. Sie besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

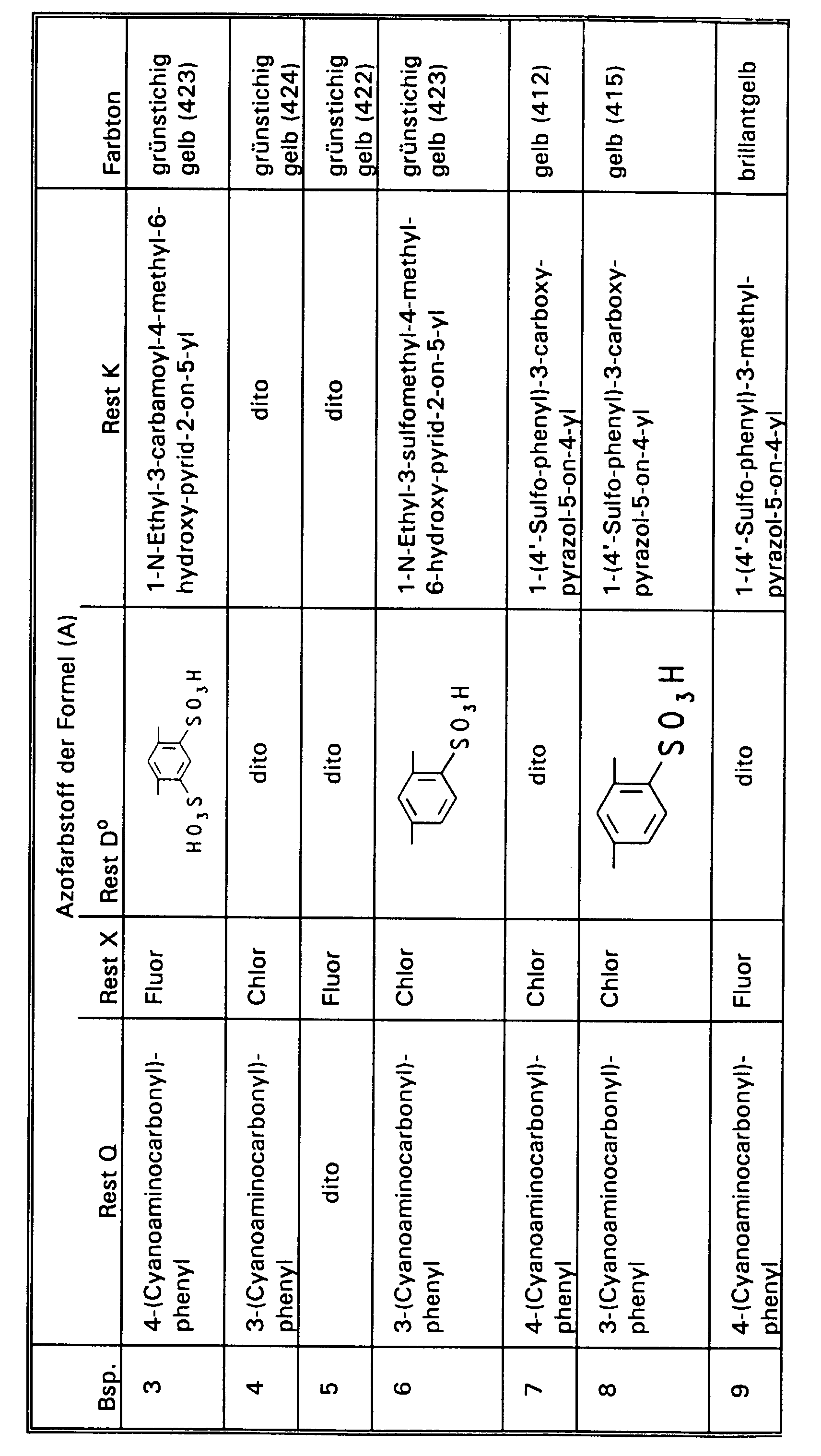

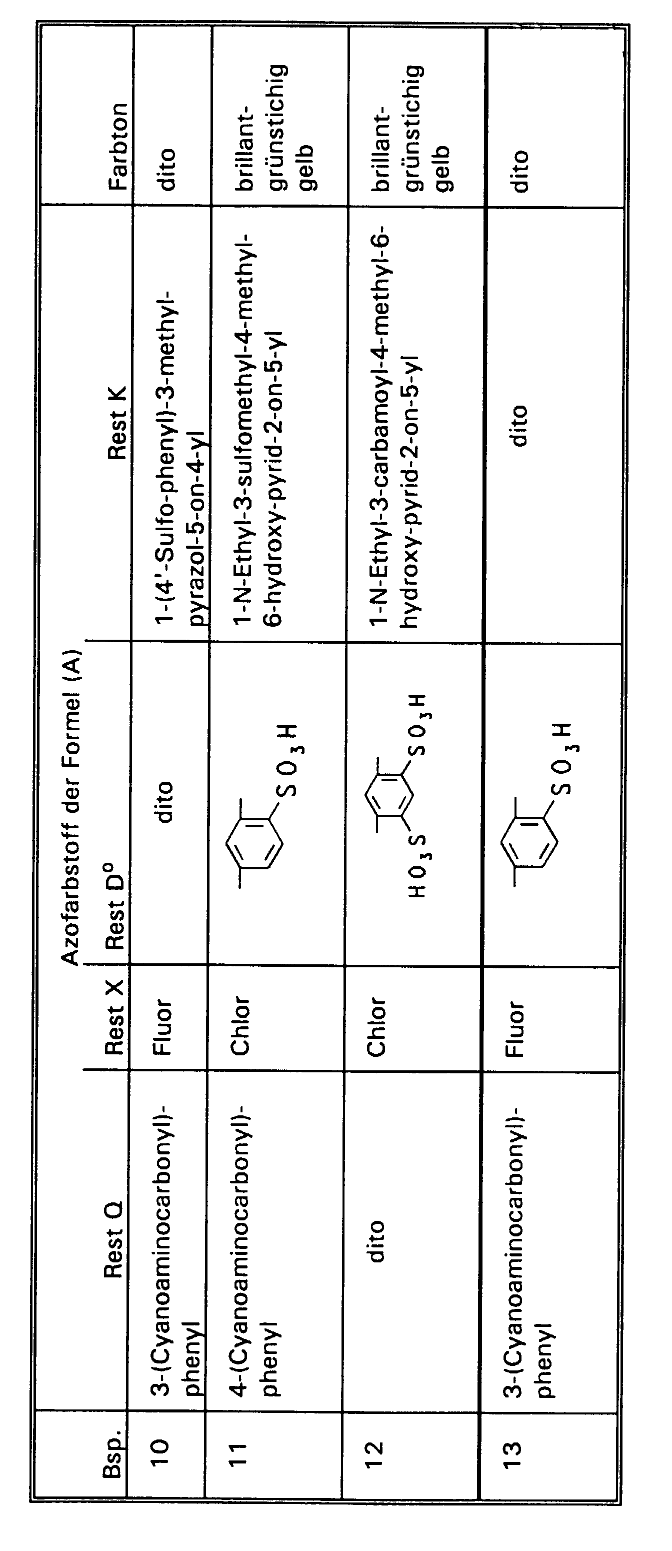

### Beispiel 14

Eine neutrale Lösung von 21,8 Teilen der Verbindung 4-(3',6',8'-Trisulfonaphth-2'-yl)-azo-3-ureido-anilin in 300 Teilen Wasser werden bei 0°C und einem pH-Wert von 4 mit 7,4 Teilen Cyanurchlorid versetzt. Der Ansatz wird bei dieser Temperatur und diesem pH-Wert noch einige Zeit bis zur Beendigung der Reaktion weitergerührt. Sodann werden 6,44 Teile 4-Amino-N'-cyanobenzamid hinzugegeben und die Umsetzung bei 20°C und einem pH-Wert zwischen 6 und 7 durchgeführt.

Der erhaltene erfindungsgemäße Azofarbstoff, der, in Form der freien Säure geschrieben, die Formel 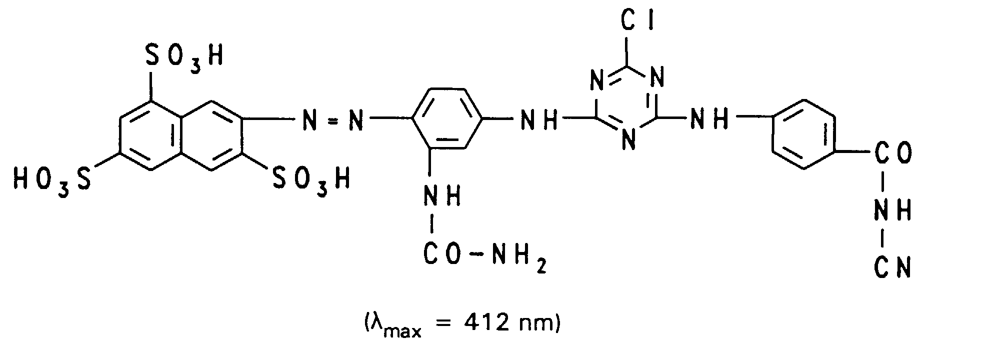 besitzt, wird mittels Natriumchlorid als Alkalimetallsalz (Natriumsalz) ausgesalzen und isoliert. Er zeigt sehr gute faserreaktive Farbstoffeigenschaften und färbt beispielsweise Baumwolle nach den für faserreaktive Farbstoffe üblichen Anwendungsverfahren in kräftigen goldgelben Tönen mit guten Echtheitseigenschaften, von denen insbesondere die Chlor- und Lichtechtheiten hervorgehoben werden können.

### Beispiel 15

Man verfährt gemäß der Verfahrensweise des Beispieles 14, setzt jedoch als Ausgangs-Azoverbindung 22,1 Teile der Verbindung 7-(1',5'-Disulfo-naphth-2'-yl)-azo-6-sulfo-3-amino-8-hydroxy-naphthalin ein.

Man isoliert die erfindungsgemäße Azoverbindung der Formel (in Form der freien Säure geschrieben) 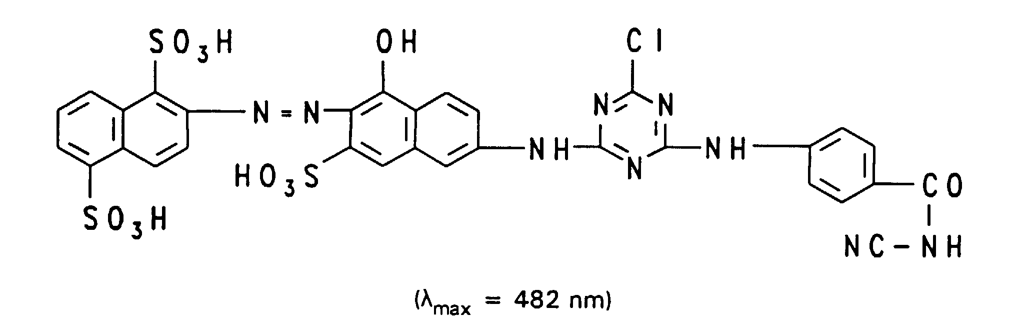 durch Aussalzen mit Natriumchlorid als Alkalimetallsalz. Sie zeigt sehr gute Farbstoffeigenschaften und färbt die in der Beschreibung genannten Materialien, wie beispielsweise Baumwolle, nach den für faserreaktive Farbstoffe üblichen Färbe- und Druckverfahren in brillanten orangen Tönen mit guten Echtheitseigenschaften, von denen insbesondere die Chlor- und Lichtechtheiten hervorgehoben werden können.

### Beispiel 16

Man suspendiert 12,8 Teile 1-Amino-8-naphthol-3,6-disulfonsäure in 100 Teilen Wasser und gibt bei 10°C und einem pH-Wert zwischen 2 bis 2,5 7,4 Teile Cyanurchlorid hinzu und rührt den Ansatz innerhalb dieses pH-Bereiches und bei dieser Temperatur noch etwa drei Stunden weiter. Danach gibt man 6,44 Teile 4-Amino-N'-cyanobenzamid hinzu und führt die Umsetzung bei 40°C und einem pH-Wert von 6,5 während etwa drei Stunden durch.
Anschließend kühlt man den Ansatz auf 0°C ab und gibt eine in üblicher und bekannter Weise hergestellte Diazoniumsalzlösung aus 12,1 Teilen 2-Aminonaphthalin-1,5-disulfonsäure hinzu und führt die Kupplungsreaktion bei einem pH-Wert von 5 und einer Temperatur von etwa 15°C durch. Die erhaltene erfindungsgemäße Azoverbindung besitzt, in Form der freien Säure geschrieben, die Formel

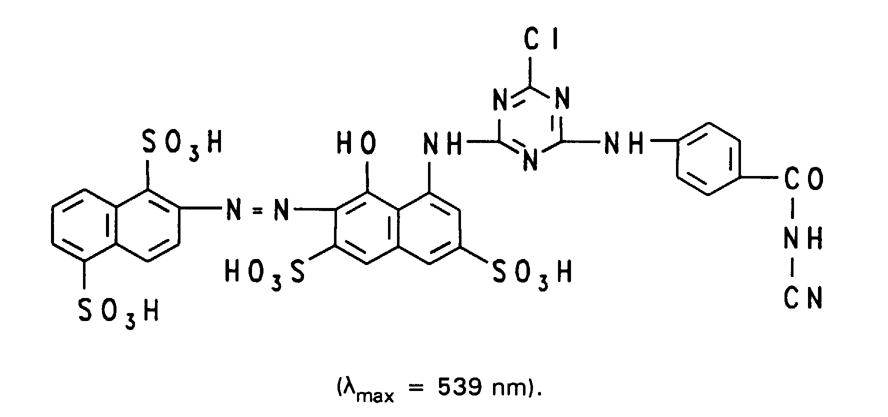

Sie wird als Alkalimetallsalz (Natriumsalz) durch Aussalzen mit Natriumchlorid isoliert und färbt die in der Beschreibung genannten Materialien, wie beispielsweise Baumwolle, nach den für faserreaktive Farbstoffe üblichen Anwendungsverfahren in brillanten kräftigen Rottönen mit guten Echtheitseigenschaften.

### Beispiel 17

Eine neutrale Lösung von 0°C aus 12,8 Teilen 1-Amino-8-naphthol-3,6-disulfonsäure und 7,7 Teilen Natriumfluorid in 200 Teilen Wasser wird analog den Angaben in der Europäischen Patentanmeldungs-Veröffentlichung 0 172 790

in kontinuierlicher Verfahrensweise mit 5,5 Teilen Cyanurfluorid umgesetzt. Nach 5 Minuten gibt man 6,44 Teile 4-Amino-N'-cyanobenzamid hinzu und führt die Umsetzung bei 10°C und einem pH-Wert von 6,5 während etwa zwei Stunden durch.
Anschließend kühlt man den Ansatz auf 0°C ab und gibt eine in üblicher und bekannter Weise hergestellte Diazoniumsalzlösung aus 12,1 Teilen 2-Aminonaphthalin-1,5-disulfonsäure hinzu und führt die Kupplungsreaktion bei einem pH-Wert von 5 und einer Temperatur von etwa 15°C durch.

Die erhaltene erfindungsgemäße Azoverbindung besitzt, in Form der freien Säure geschrieben, die Formel

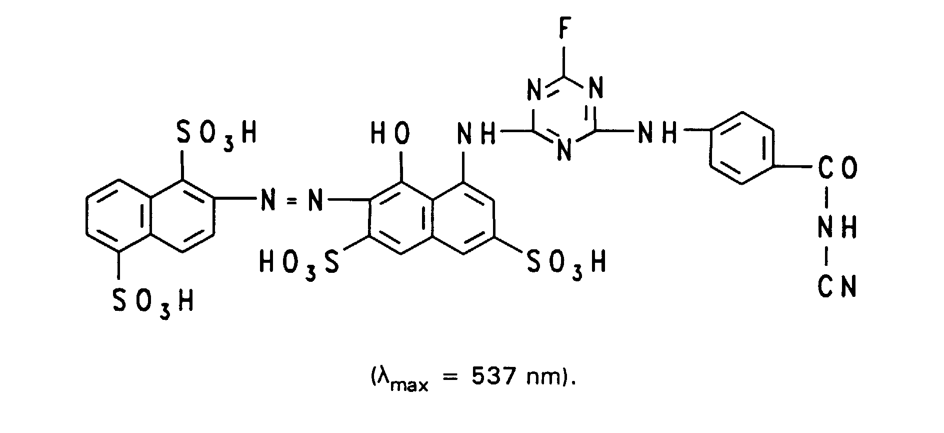

Der erfindungsgemäße Farbstoff färbt beispielsweise Baumwolle in kräftigen, brillanten roten Tönen mit guten Echtheiten.

### Beispiele 18 bis 81

In den nachfolgenden Tabellenbeispielen sind weitere erfindungsgemäße Azofarbstoffe mit Hilfe der Komponenten entsprechend der allgemeinen Formel (B) 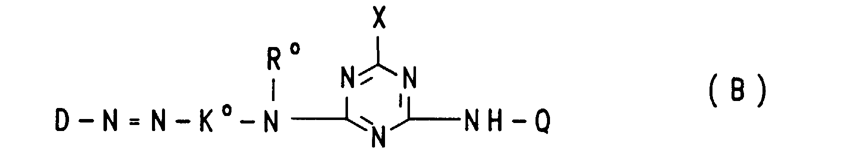 beschrieben. Sie lassen sich in erfindungsgemäßer Weise, beispielsweise analog einem der Beispiele 25 bis 28, unter Einsatz der aus dem jeweiligen Tabellenbeispiel in Verbindung mit der allgemeinen Formel (B) ersichtlichen Komponenten (wie der Diazokomponente D-NH₂, der kupplungsfähigen Verbindung H-K⁰-N(R⁰)-H , Cyanurchlorid oder Cyanurfluorid und einer Amino-N'-cyano-benzamid-Verbindung der Formel H₂N-Q) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Tönen in hoher Farbstärke und mit guten Echtheiten.

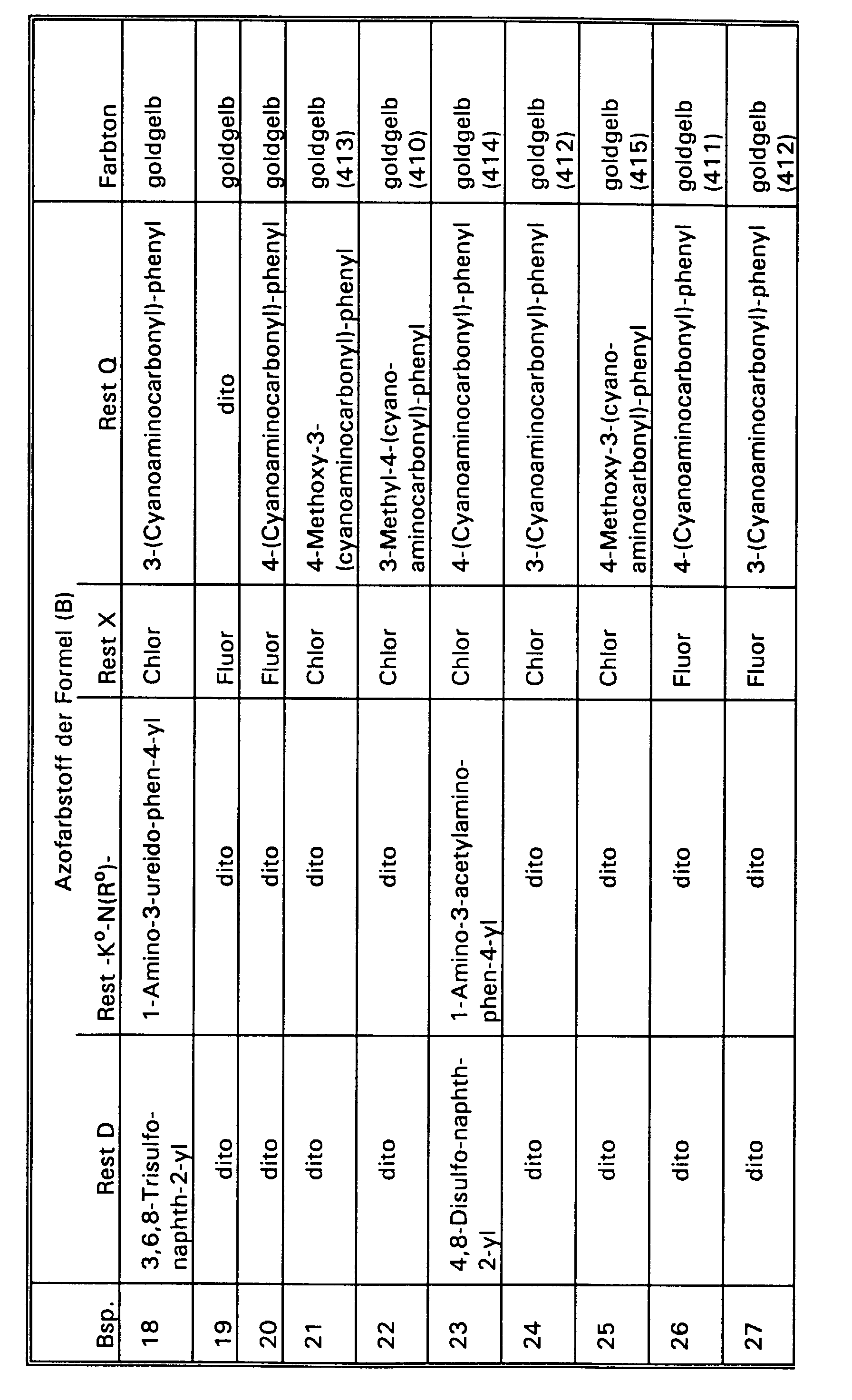

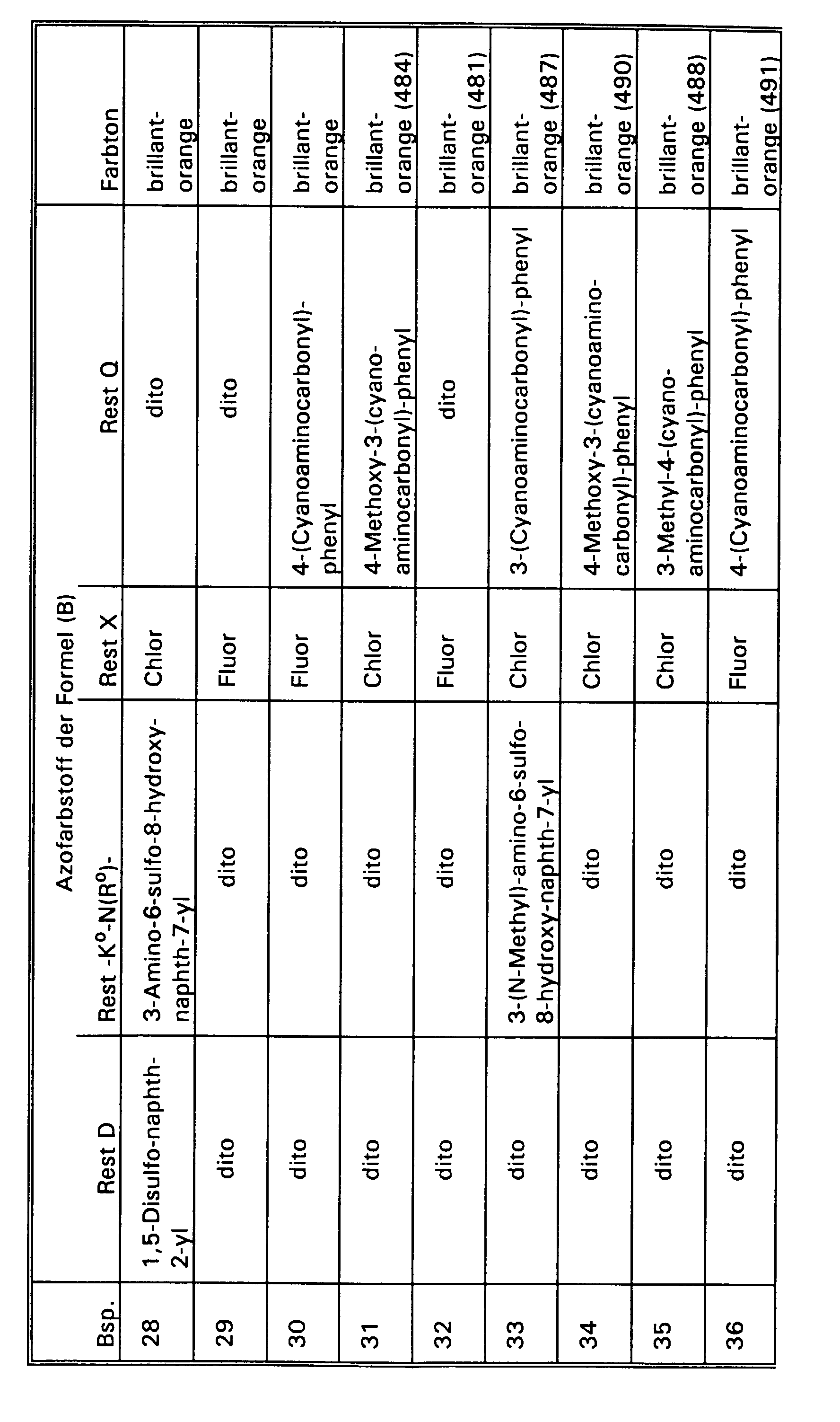

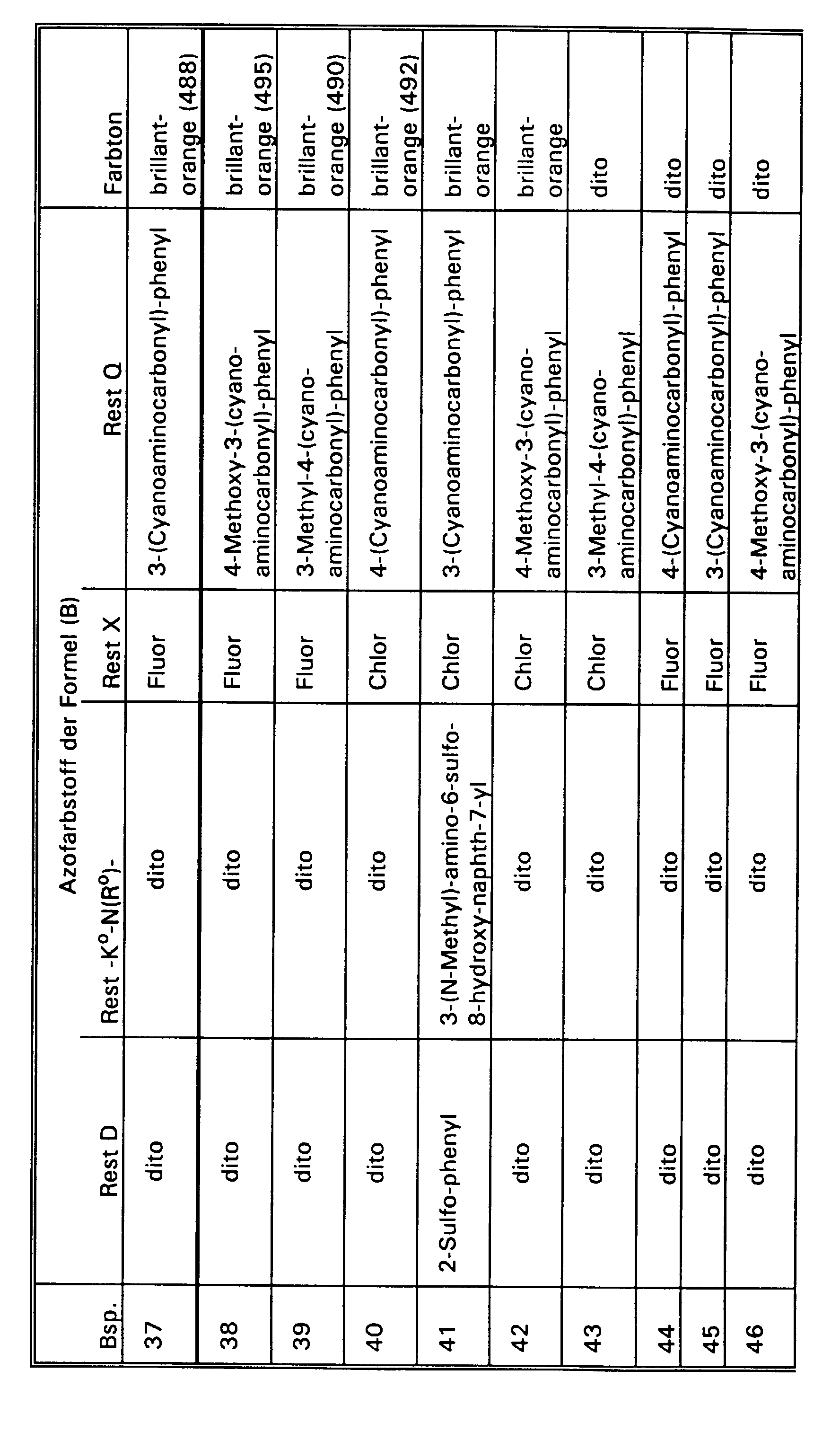

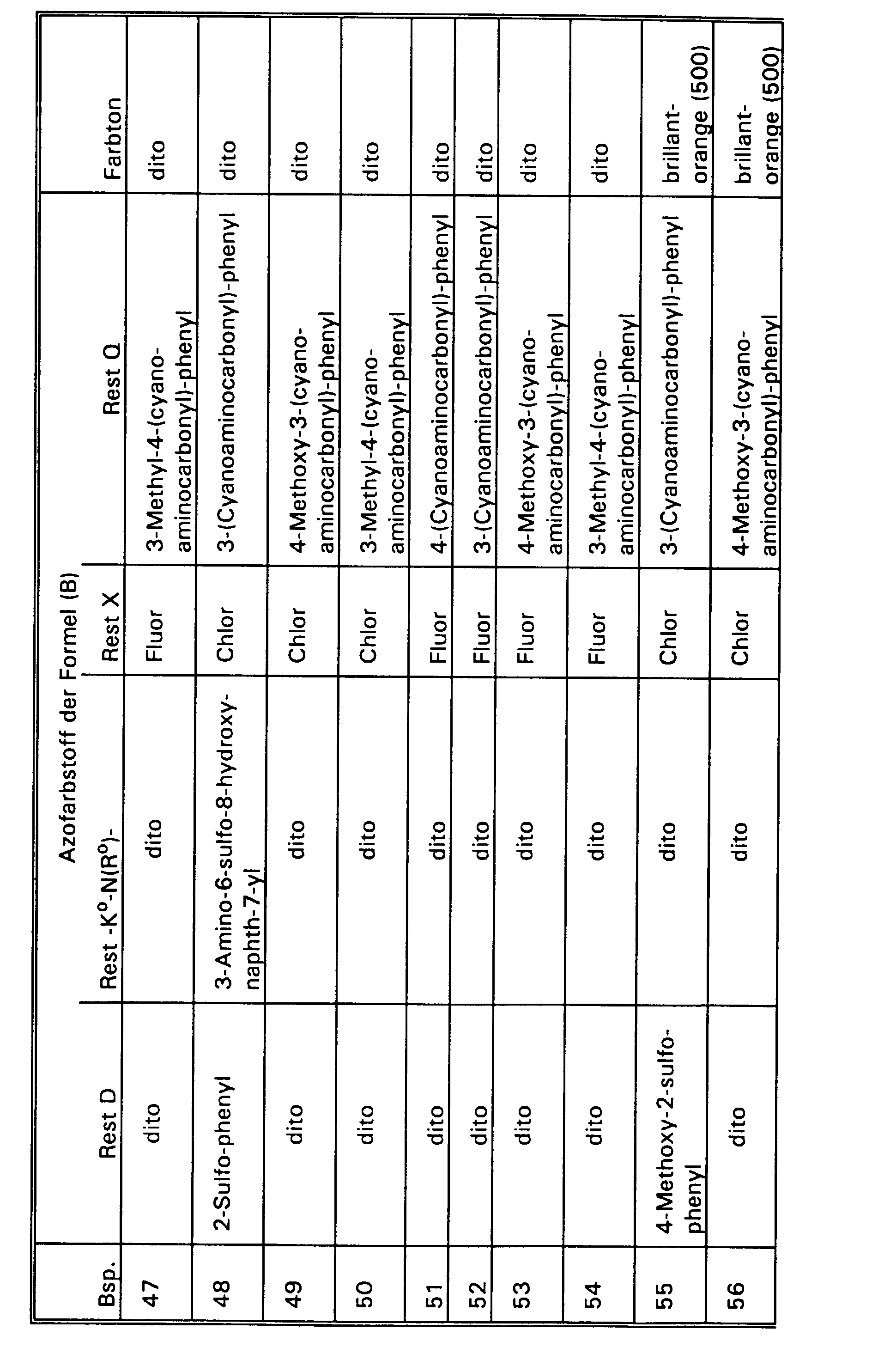

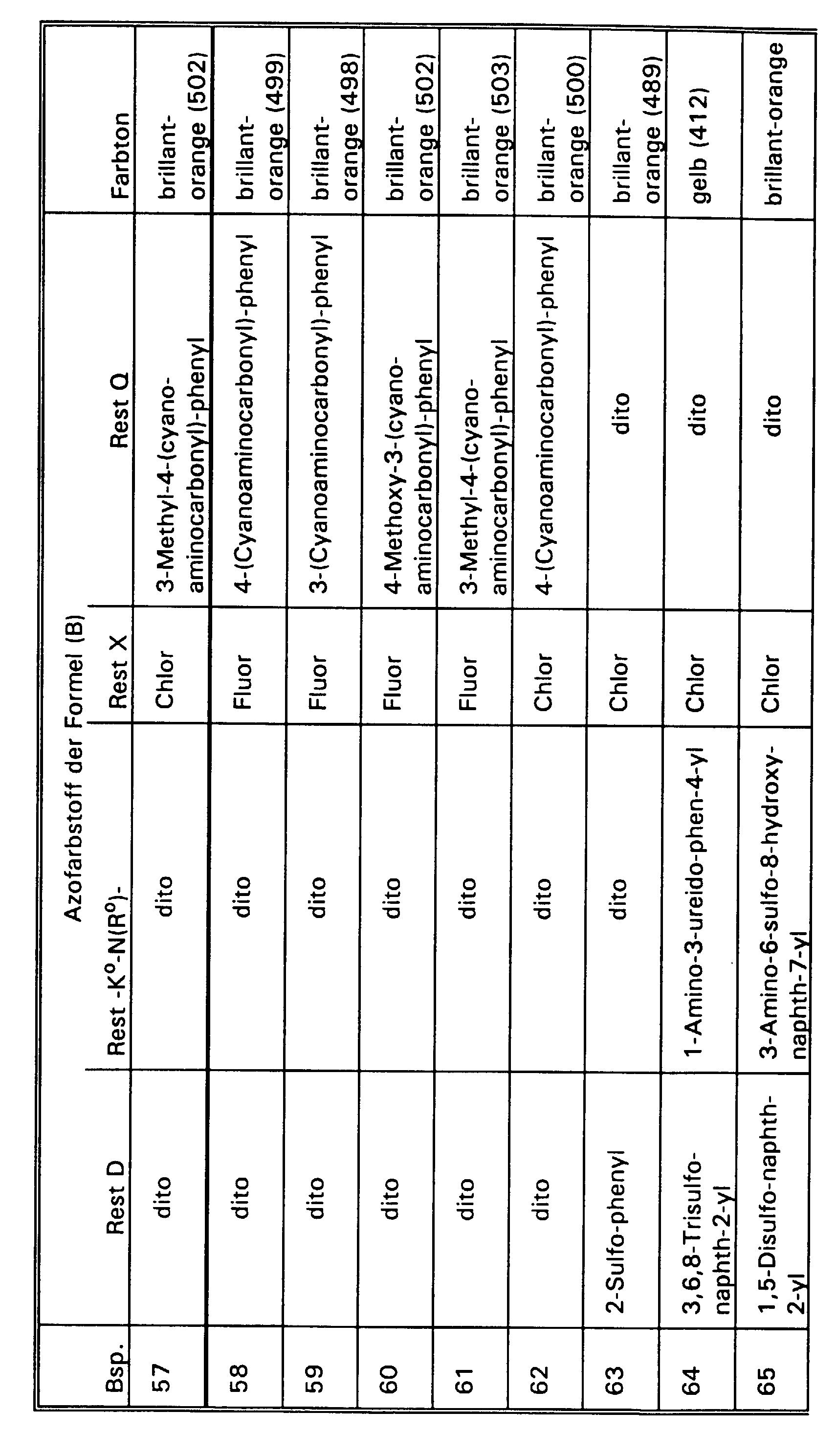

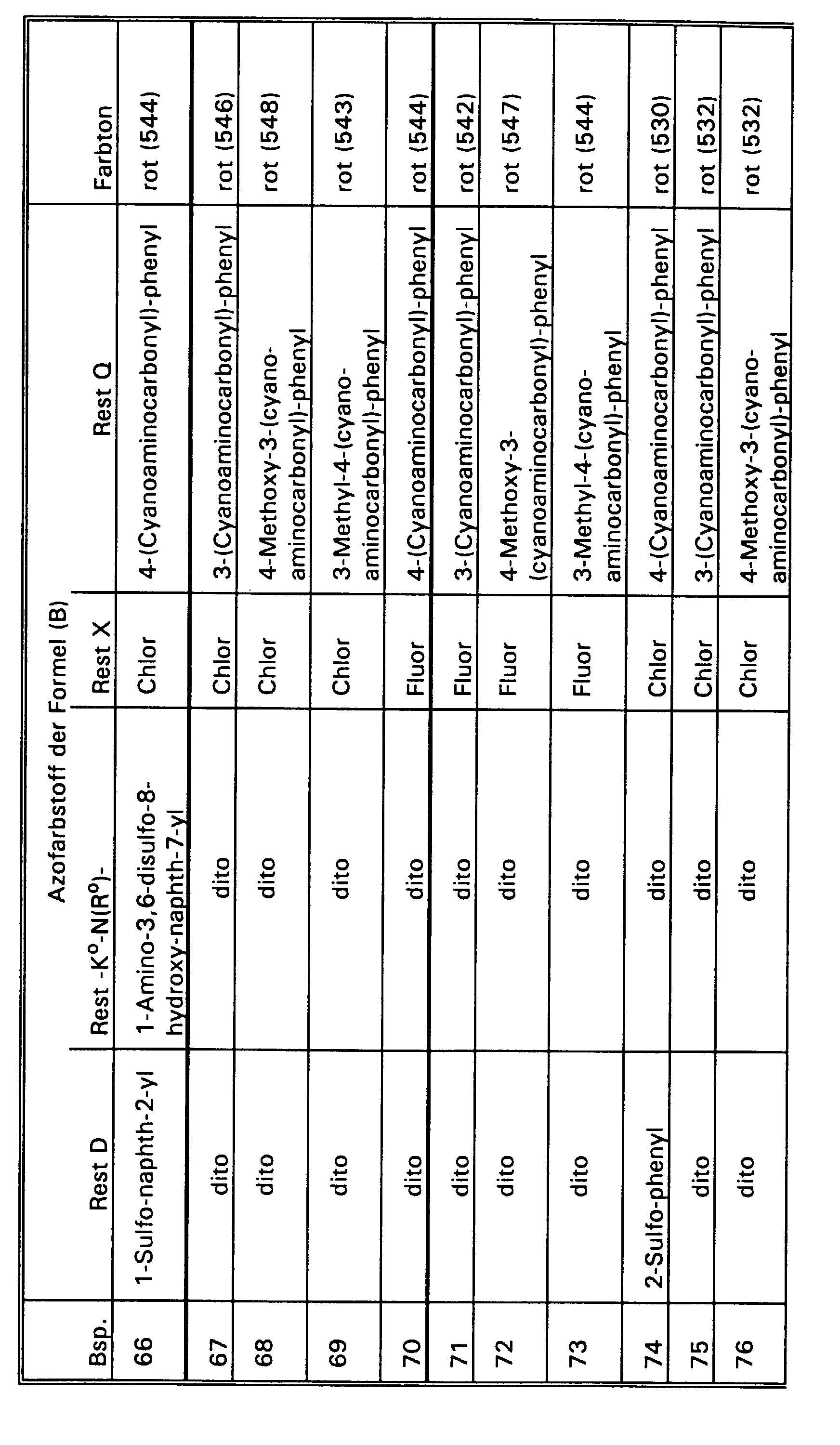

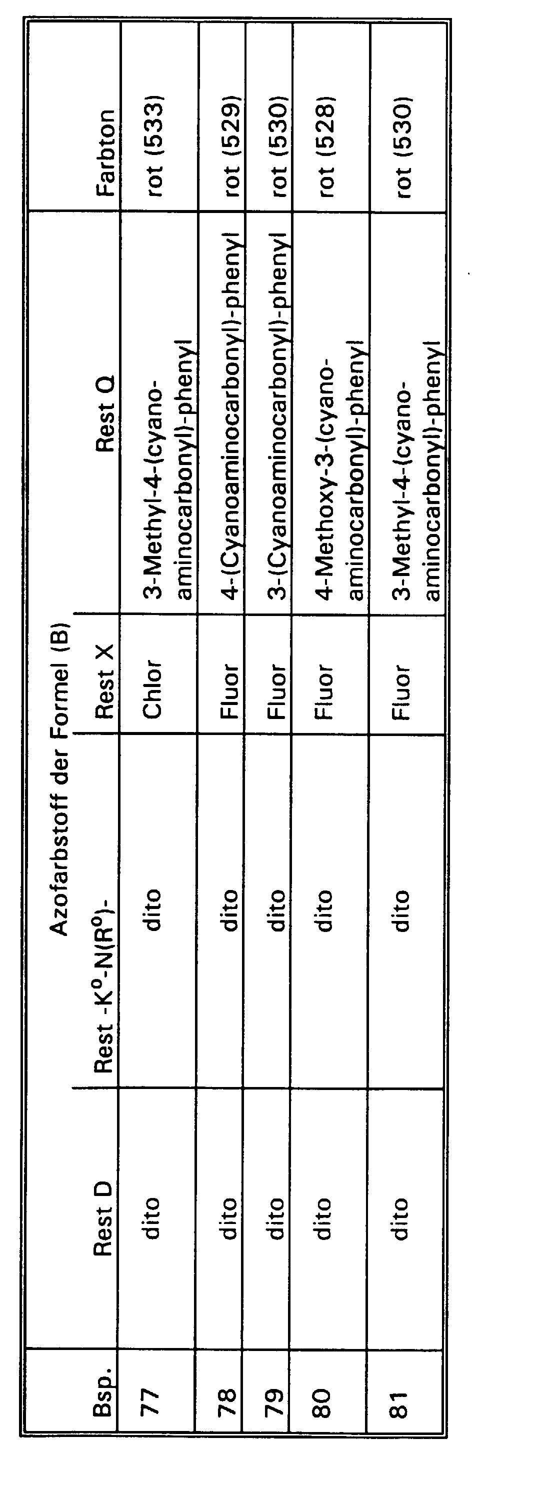

### Beispiel 82

Man verfährt gemäß den Angaben des Beispieles 16 zur Herstellung des Vorproduktes aus den Reaktanten 1-Amino-8-naphthol-3,6-disulfonsäure, Cyanurchlorid und 4-Amino-N'-cyanobenzamid, fügt sodann die auf üblichem Wege hergestellte salzsaure wäßrige Diazoniumsalzsuspension aus 8,9 Teilen 2-Hydroxy-3-chlor-5-sulfo-anilin hinzu und führt die Kupplungsreaktion bei einem pH-Wert von 5 und einer Temperatur von etwa 15°C durch. Zu der so hergestellten Lösung der erfindungsgemäßen Azoverbindung gibt man 9,2 Teile Kupfer(ll)sulfat-pentahydrat und rührt den Ansatz zunächst für kurze Zeit bei 20°C und anschließend bei 60 bis 70°C für etwa zwei Stunden. Danach wird ein pH-Wert von 6 eingestellt und der erfindungsgemäße Kupferkomplex-Azofarbstoff durch Aussalzen mit Natriumchlorid isoliert.

Er besitzt, in Form der freien Säure geschrieben, die Formel 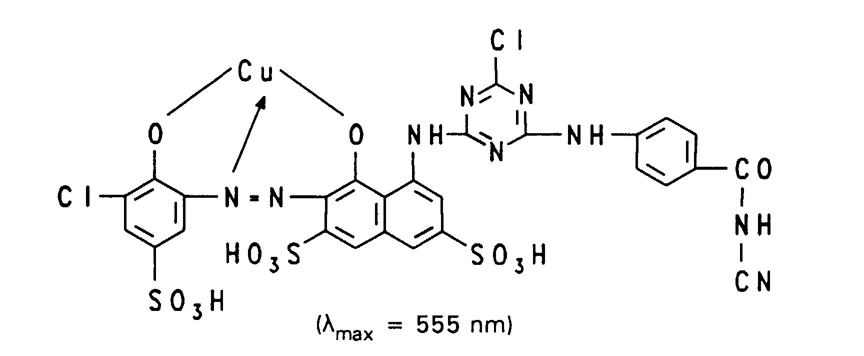 zeigt sehr gute Farbstoffeigenschaften und liefert nach den in der Technik für faserreaktive Farbstoffe üblichen Applikationsverfahren auf den in der Beschreibung genannten Materialien, wie insbesondere Baumwolle, farbstarke Färbungen und Drucke in brillanten violetten Tönen mit guten Echtheitseigenschaften.

### Beispiele 83 bis 90

In den nachfolgenden Tabellenbeispielen sind weitere erfindungsgemäße Kupferkomplex-Monoazofarbstoffe mit Hilfe der Komponenten entsprechend der allgemeinen Formel (C) und (D) 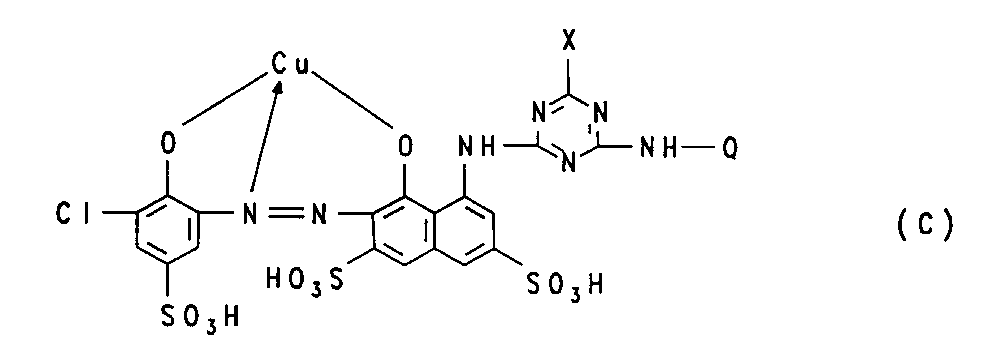 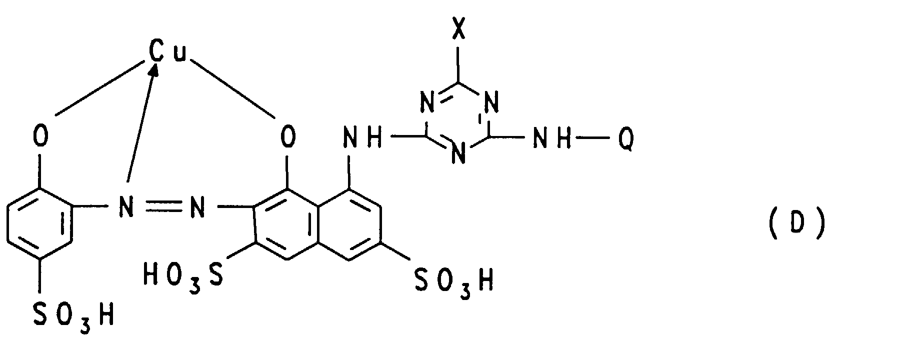 beschrieben. Sie lassen sich in erfindungsgemäßer Weise, beispielsweise analog dem Ausführungsbeispiel 82 unter Verwendung der aus dem jeweiligen Tabellenbeispiel ersichtlichen Komponenten herstellen. Sie besitzen sehr gute faserreaktive Farbstoffeigenschaften und färben die in der Beschreibung genannten Materialien, insbesondere Cellulosefasermaterialien, in dem in dem jeweiligen Tabellenbeispiel (hier für Baumwolle) angegebenen Farbton in hoher Farbstärke und mit guten Echtheiten.

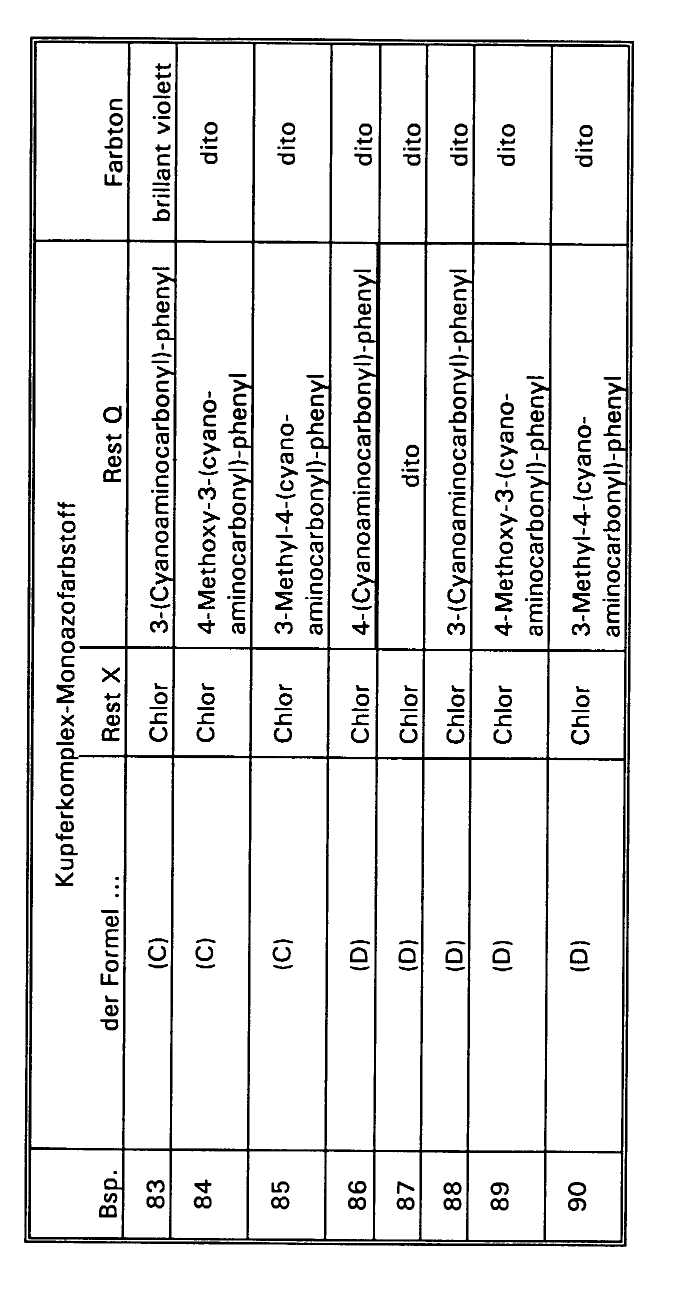

### Beispiel 91

23,4 Teile der Kupferformazan-Ausgangsverbindung der Formel (in Form der freien Säure geschrieben) 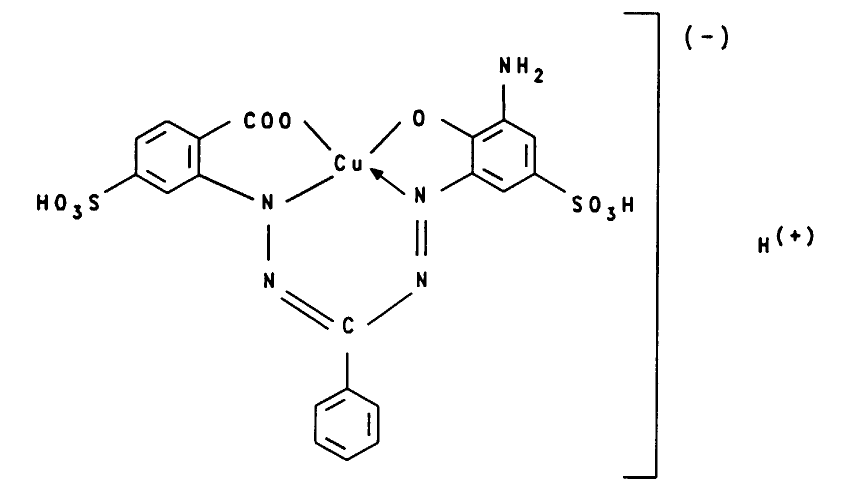 (bekannt aus EP-A-0 382 111) werden in 300 Teilen Waser bei 0°C und unter Einhaltung eines pH-Wertes von 5 mit 7,4 Teilen Cyanurchlorid umgesetzt. Danach gibt man zu dem Ansatz 6,44 Teile 4-Amino-N'-cyanobenzamid und führt die Umsetzung bei 30°C und bei einem pH-Wert von 6 bis 7 durch.

Der erfindungsgemäße Kupferformazan-Farbstoff, der, in Form der freien Säure, der Formel 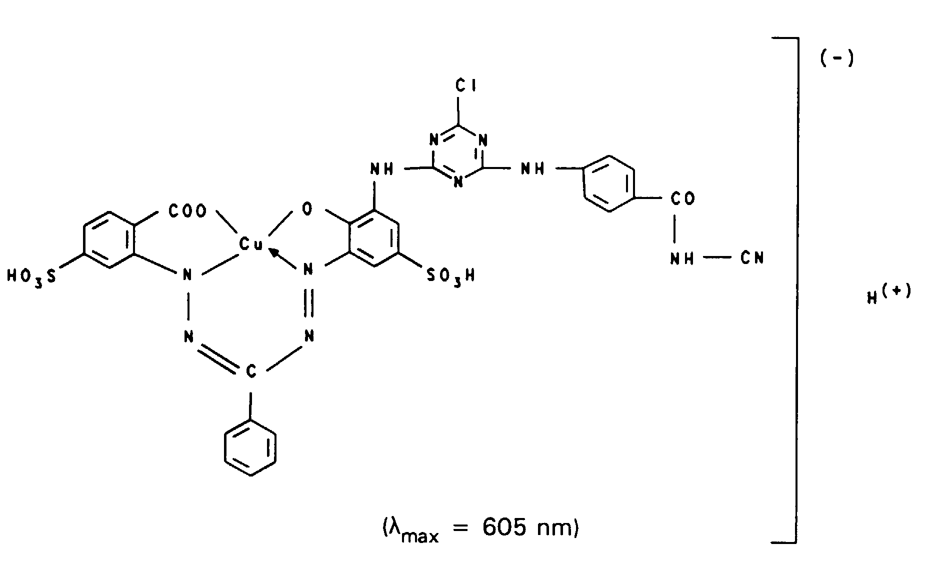 entspricht, wird in üblicher Weise durch Aussalzen mit Natrium- oder Kaliumchlorid als Alkalimetallsalz isoliert. Er zeigt sehr gute faserreaktive Farbstoffeigenschaften und liefert beispielsweise auf Baumwolle nach den üblichen Anwendungsverfahren für faserreaktive Farbstoffe farbstarke blaue Färbungen und Drucke mit guten Echtheiten.

### Beispiel 92 bis 99

In den nachfolgenden Tabellenbeispielen sind weitere erfindungsgemäße Kupferformazan-Farbstoffe mit Hilfe von deren Ausgangsverbindungen beschrieben. Sie lassen sich in erfindungsgemäßer Weise durch Umsetzung einer aminogruppenhaltigen Ausgangsverbindung, die den Chromophor bereits enthält, dem Trihalogentriazin und der Amino-N-cyanobenzamid-Verbindung, beispielsweise analog einem der obigen, dieser Verfahrensweise entsprechenden Ausführungsbeispiele, herstellen. Sie besitzen sehr gute faserreaktive Farbstoffeigenschaften und färben die in der Beschreibung genannten Materialien, wie beispielsweise Cellulosefasermaterialien, in dem in dem jeweiligen Tabellenbeispiel (hier für Baumwolle) angegebenen Farbton in hoher Farbstärke und mit guten Echtheiten. 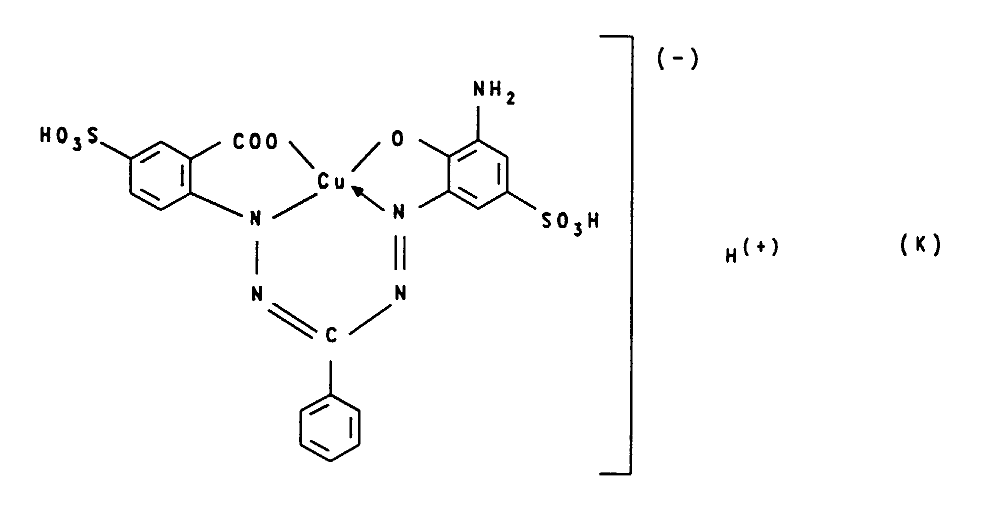 Ausgangsverbindung (K) bekannt aus EP-A-0 382 111.

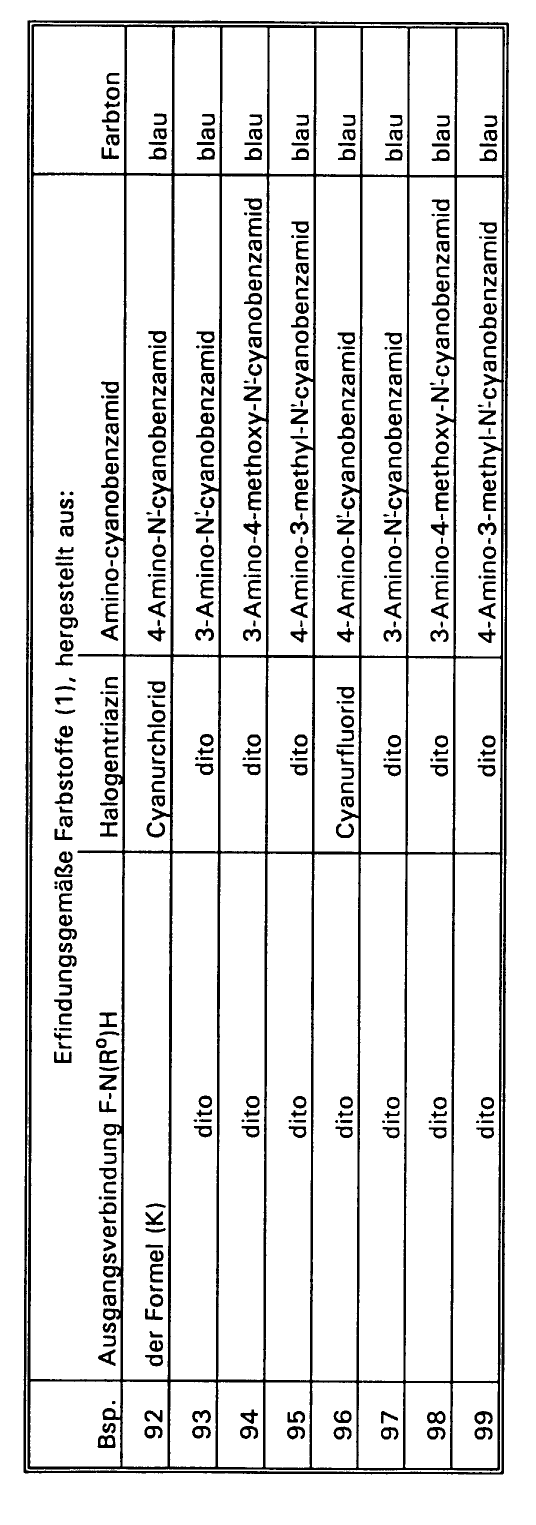

### Beispiel 100

Eine Suspension von 18,4 Teilen Cyanurchlorid in 300 Teilen Eiswasser werden mit 16,2 Teilen 4-Amino-N'-cyanobenzamid versetzt, und die Umsetzung erfolgt sodann unter Einhaltung eines pH-Wertes von 6 bis 6,5 mittels 10%iger wäßriger Natriumhydroxidlösung bei 0 bis 5°C während etwa 3 Stunden. Danach gibt man 30 Teile der Triphendioxazinverbindung der Formel 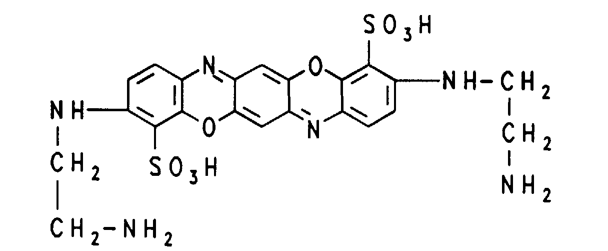 hinzu und rührt den Ansatz bei 30°C und einem pH-Wert zwischen 9 und 10 während 2 Stunden weiter. Nach Beendigung der Reaktion wird der pH-Wert auf 6 gestellt und der erfindungsgemäße Triphendioxazinfarbstoff, der, in Form der freien Säure geschrieben, der Formel 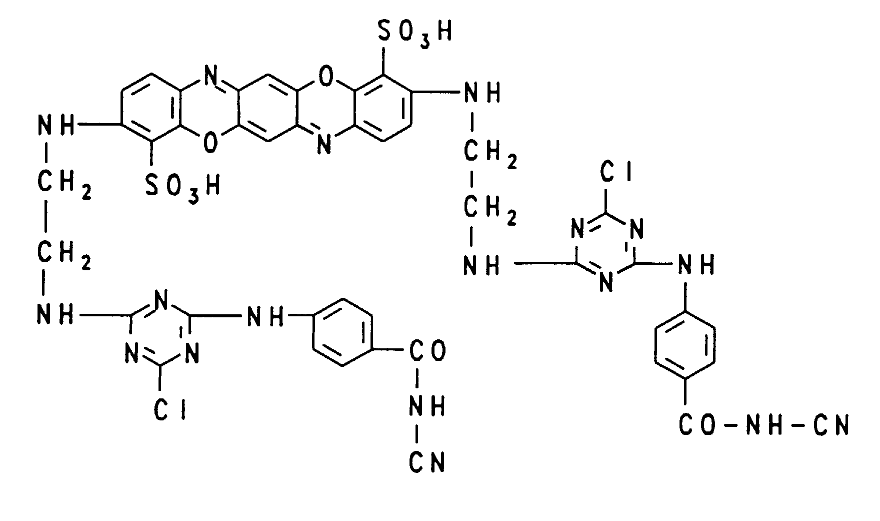 entspricht, durch Aussalzen mit Natriumchlorid isoliert. Er zeigt sehr gute faserreaktive Farbstoffeigenschaften und färbt beispielsweise Baumwolle in farbstarken, blauen Tönen.

### Beispiele 101 bis 108

In den nachfolgenden Tabellenbeispielen sind weitere erfindunsgemäße Triphendioxazinfarbstoffe entsprechend der allgemeinen Formel (Q) 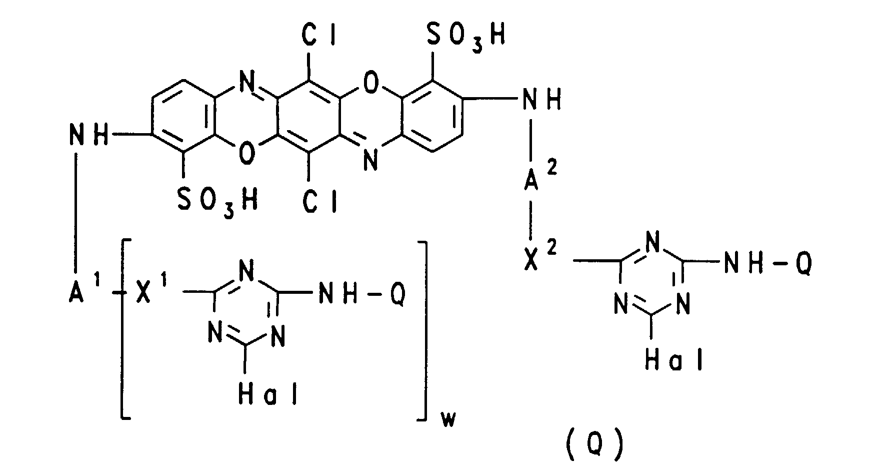 beschrieben. Sie lassen sich in erfindungsgemäßer Weise durch Umsetzung der entsprechenden aminogruppenhaltigen Triphendioxazin-Ausgangsverbindung, Cyanurchlorid oder Cyanurfluorid und der Amino-N'-cyanobenzamid-Verbindung, beispielsweise nach dem obigen Beispiel 100, herstellen. Sie besitzen sehr gute faserreaktive Farbstoffeigenschaften und färben die in der Beschreibung genannten Materialien, wie beispielsweise Cellulosefasermaterialien, in blauen Tönen in hoher Farbstärke und mit guten Echtheiten.

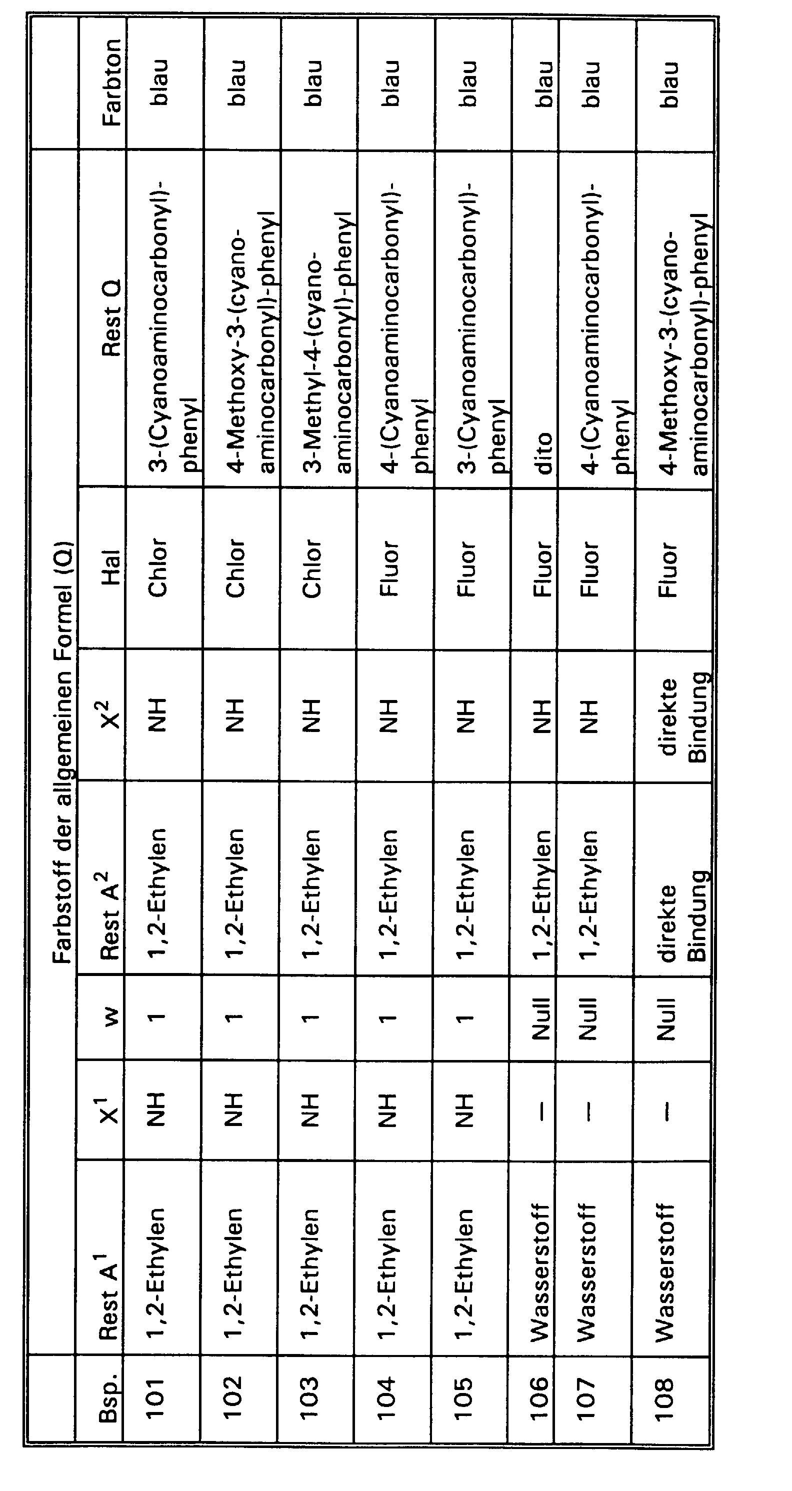

## Patentansprüche

1. Farbstoff der allgemeinen Formel (1) 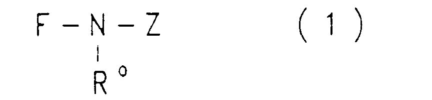 in welcher bedeuten:
F-N(R⁰)-Z ist ein Farbstoff der allgemeinen Formel (1A), (1B), (1C), (1D), (1E), (1F), (1G), (1H), (1J), (1K), (1M) oder (1N) 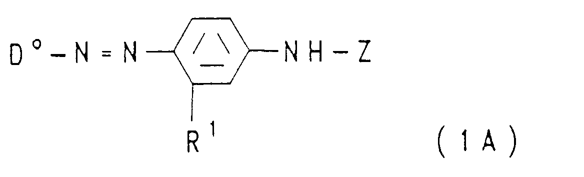 in welcher
D⁰ Monosulfo-, Disulfo- oder Trisulfo-naphth-2-yl ist,
R¹ Ureido oder Alkanoylamino von 2 bis 5 C-Atomen, wie Propionylamino und insbesondere Acetylamino, ist und
Z ein Rest der allgemeinen Formel (2) 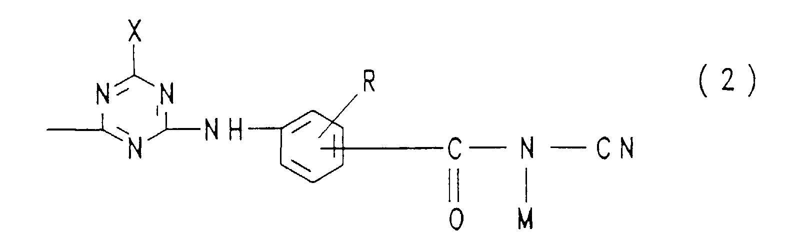 ist, in welcher
X für Fluor oder Chlor steht,
R Wasserstoff, Alkyl von 1 bis 4 C-Atomen, wie Ethyl und insbesondere Methyl, oder Alkoxy von 1 bis 4 C-Atomen, wie Ethoxy und insbesondere Methoxy, ist und
M Wasserstoff oder ein Alkalimetall, wie Natrium, Lithium oder Kalium, ist, 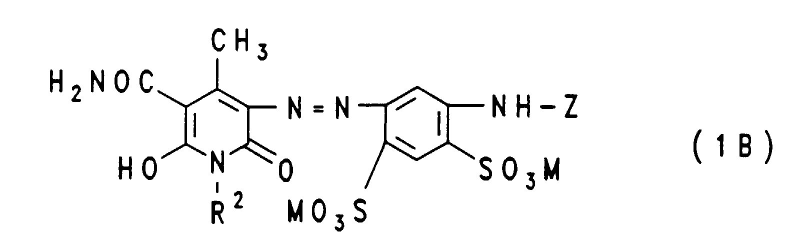 in welcher
M und Z die obengenannten Bedeutungen haben und
R² Alkyl von 1 bis 4 C-Atomen, wie insbesondere Ethyl, ist; 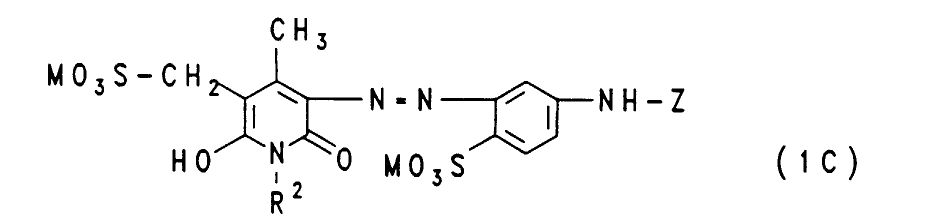 in welcher M und R² die obengenannten Bedeutungen haben und Z ein Rest der oben angegebenen allgemeinen Formel (2) ist, in welcher M und R die angegebenen Bedeutungen haben und X für Chlor steht; 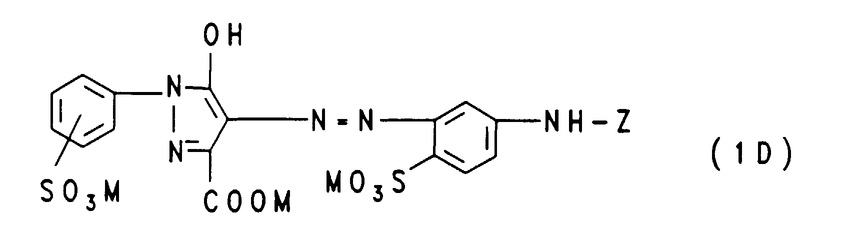 in welcher M die obengenannte Bedeutung besitzt und Z ein Rest der oben angegebenen allgemeinen Formel (2) ist, worin M und R die obengenannten Bedeutungen haben und X für Chlor steht; 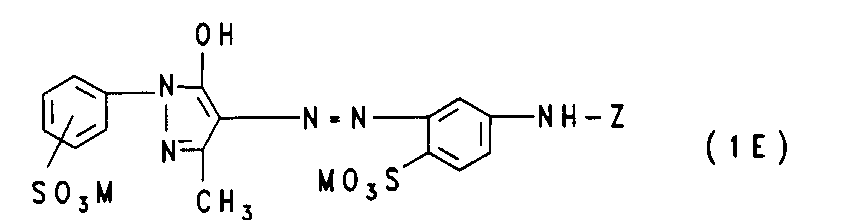 in welcher M die obengenannte Bedeutung besitzt und Z ein Rest der oben angegebenen allgemeinen Formel (2) ist, worin M und R die obengenannten Bedeutungen haben und X für Fluor steht; 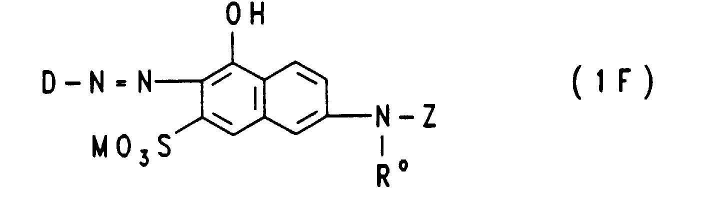 in welcher
M und Z die anfangs genannten Bedeutungen haben,
D der 2-Sulfo-phenyl-Rest ist, der noch durch ein Alkyl von 1 bis 4 C-Atomen, wie Ethyl und insbesondere Methyl, oder durch ein Alkoxy von 1 bis 4 C-Atomen, wie Ethoxy und insbesondere Methoxy, substituiert sein kann, oder ein 1-Sulfo-naphth-2-yl-Rest ist, der noch durch 1 oder 2 Sulfogruppen substituiert sein kann, und
R° Wasserstoff oder Alkyl von 1 bis 4 C-Atomen, wie Ethyl und insbesondere Methyl, ist; 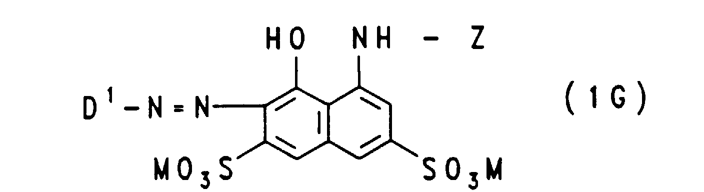 in welcher
M und Z die anfangs genannten Bedeutungen haben und
D¹ ein 1-Sulfo-naphth-2-yl-Rest ist, der noch durch 1 oder 2 Sulfogruppen substituiert sein kann; 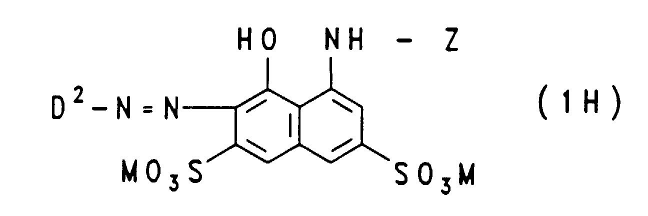 in welcher
D² der 2-Sulfo-phenyl-Rest ist,
M die obengenannte Bedeutung besitzt und
Z ein Rest der obengenannten allgemeinen Formel (2) ist, in welcher M und R die obengenannten Bedeutungen haben und X für Chlor steht; 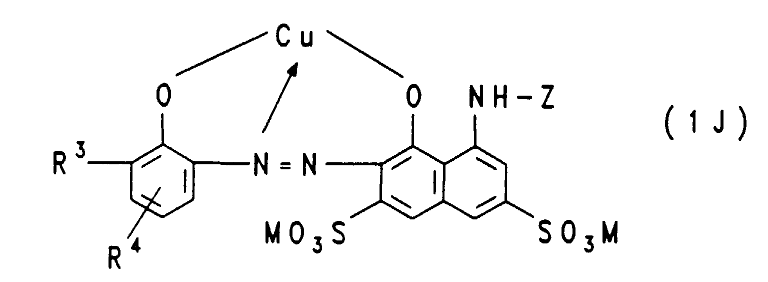 in welcher
M die obengenannte Bedeutung besitzt,
R³ Wasserstoff oder Chlor ist,
R⁴ Wasserstoff oder Sulfo ist und
Z ein Rest der oben angegebenen allgemeinen Formel (2) ist, in welcher M und R die obengenannten Bedeutungen haben und X für Chlor steht; 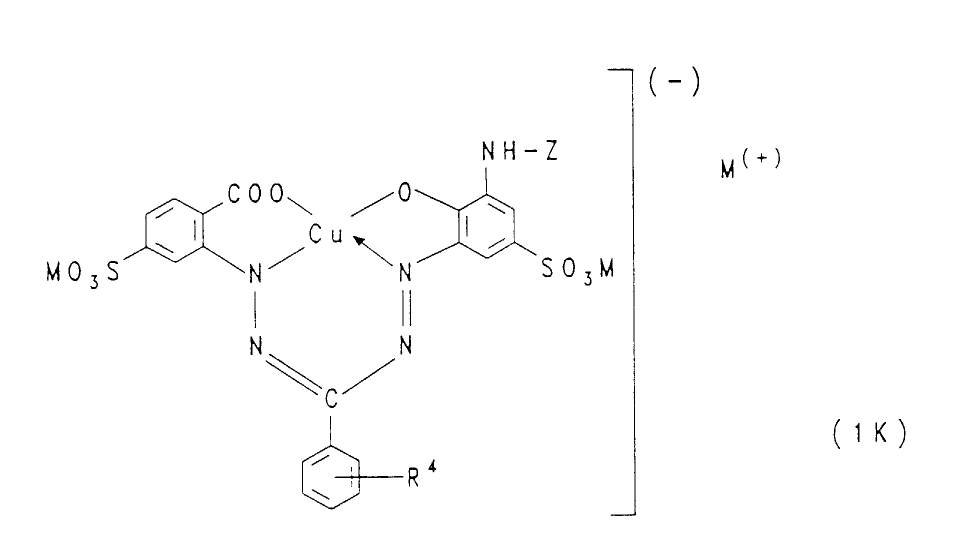 in welcher M und Z die anfangs genannten Bedeutungen haben und R⁴ Wasserstoff oder Sulfo ist; 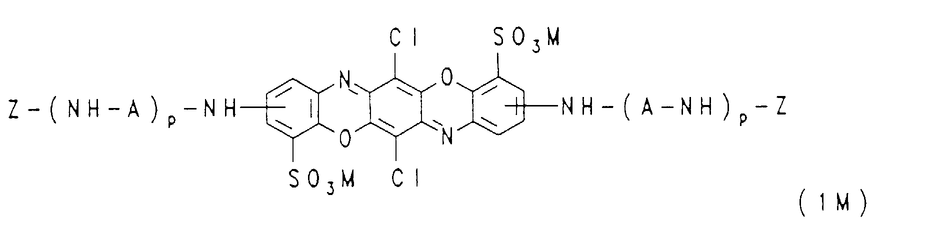 in welcher
M und Z die obengenannten Bedeutungen haben,
A Alkylen von 2 bis 6 C-Atomen, bevorzugt von 2 bis 4 C-Atomen, wie 1,2-Ethylen und 1,3-Propylen, ist, und
p für die Zahl Null oder 1 steht; 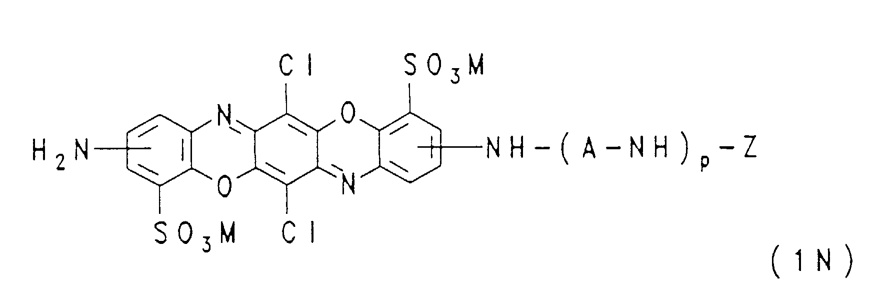 in welcher
M, A und p die obengenannten Bedeutungen haben und
Z ein Rest der oben angegebenen allgemeinen Formel (2) ist, in welcher M und R die obengenannten Bedeutungen haben und X für Fluor steht.

2. Farbstoff nach Anspruch 1, dadurch gekennzeichnet, daß R⁰ Wasserstoff ist.

3. Farbstoff nach Anspruch 1 oder 2, dadurch gekennzeichnet, daß R Wasserstoff ist.

4. Farbstoff nach Anspruch 1 der allgemeinen Formel 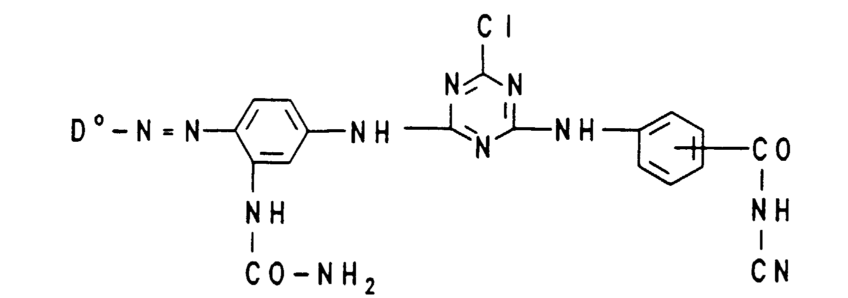 in welcher M die in Anspruch 1 genannte Bedeutung besitzt, D⁰ Monosulfo-, Disulfo- oder Trisulfo-naphth-2-yl ist und die Cyanoaminocarbonyl-Gruppe in meta- oder para-Stellung zur Aminogruppe an den Benzolkern gebunden ist.

5. Farbstoff nach Anspruch 1 der Formel 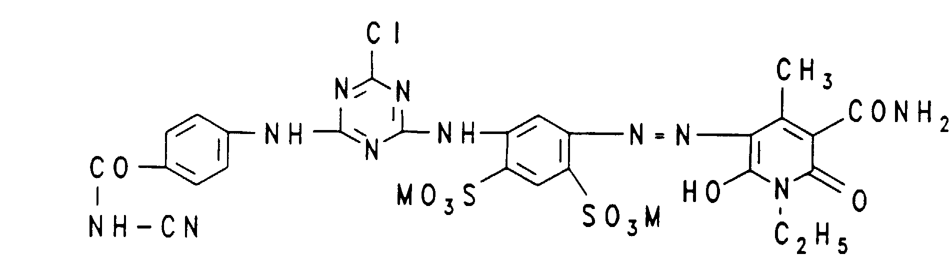 in welcher M die in Anspruch 1 genannte Bedeutung besitzt.

6. Verfahren zur Herstellung eines Farbstoffes der allgemeinen Formel (1) von Anspruch 1, dadurch gekennzeichnet, daß man, analog bekannten, für die jeweilige Farbstoffklasse spezifischen Synthesewege, für den jeweiligen Farbstoff typische Vorprodukte, von denen mindestens eines eine Gruppe der allgemeinen Formel -N(R⁰)-Z der in Anspruch 1 genannten Bedeutungen enthält, miteinander umsetzt, oder daß man eine Halogen-triazin-Verbindung der allgemeinen Formel (21) 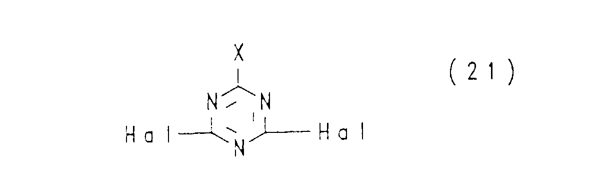 in welcher Hal für Halogen steht und X die in Anspruch 1 genannte Bedeutung besitzt, mit einer aminogruppenhaltigen Ausgangsverbindung der allgemeinen Formel (20) 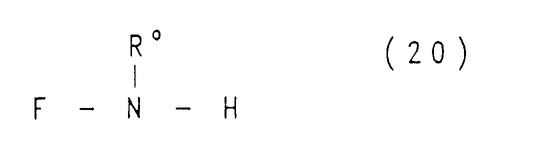 in welcher F-N(R°)- die Bedeutung der jedoch vom Rest Z freien allgemeinen Formel (1) hat, und mit einer Aminoverbindung der allgemeinen Formel (22) 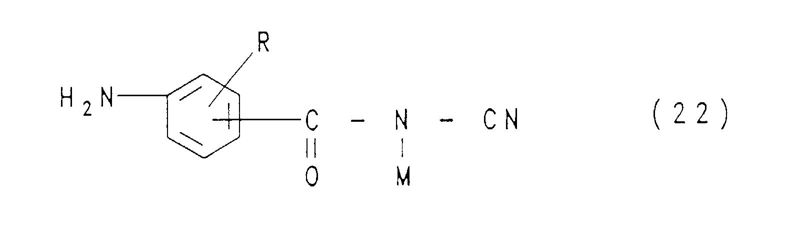 in welcher R und M die in Anspruch 1 genannten Bedeutungen haben, in beliebiger Reihenfolge miteinander umsetzt.

7. Verwendung eines Farbstoffes von Anspruch 1 oder eines nach Anspruch 6 hergestellten Farbstoffes zum Färben (einschließlich Bedrucken) von hydroxy- und/oder carbonamidgruppenhaltigem Material, insbesondere Fasermaterial.

## Claims

1. A dye of the formula (1) 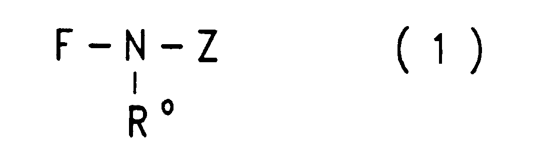 in which:
F-N(R⁰)-Z is a dye of the formula (1A), (1B), (1C), (1D) , (1E), (1F) , (1G) , (1H) , (1J) , (1K) , (1M) or (1N) 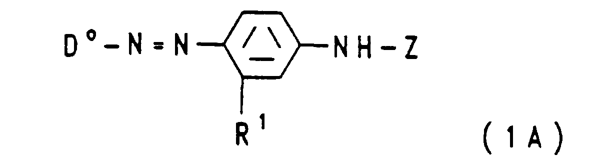 in which
D⁰ is monosulfo-, disulfo- or trisulfonaphth-2-yl,
R¹ is ureido or alkanoylamino having 2 to 5 carbon atoms, such as propionylamino and, in particular, acetylamino, and
Z is a radical of the formula (2) 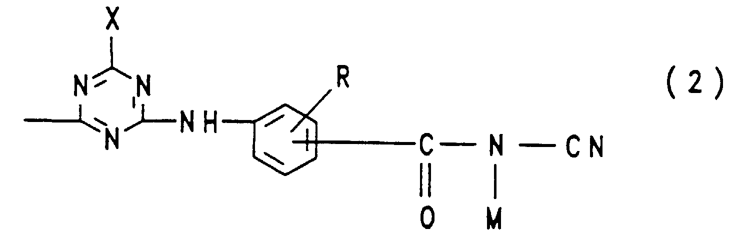 in which
X is fluorine or chlorine,
R is hydrogen, alkyl having 1 to 4 carbon atoms, such as ethyl and, in particular, methyl, or alkoxy having 1 to 4 carbon atoms, such as ethoxy and, in particular, methoxy and
M is hydrogen or an alkali metal, such as sodium, lithium or potassium, 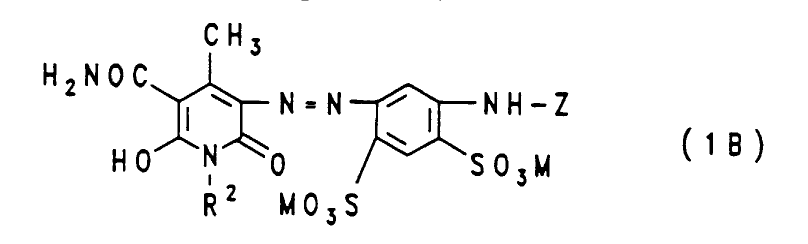 in which
M and Z have the abovementioned meanings and
R² is alkyl having 1 to 4 carbon atoms, such as, in particular, ethyl; 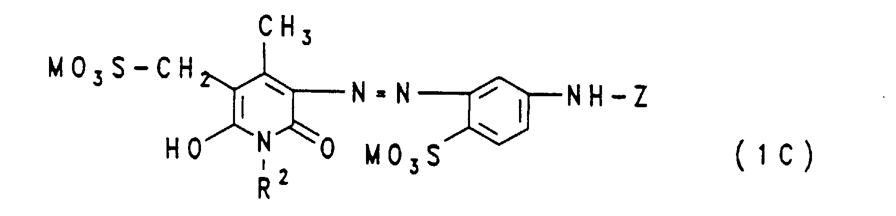 in which M and R² have the abovementioned meanings and Z is a radical of the abovementioned formula (2), in which M and R have the meanings given and X is chlorine; 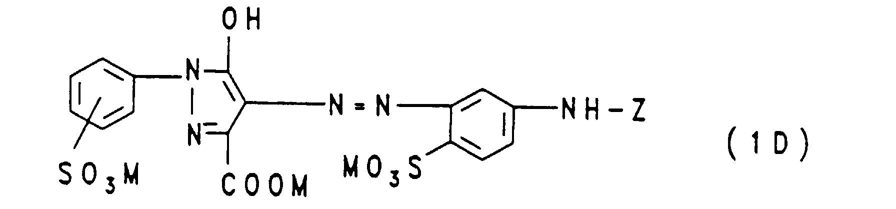 in which M has the abovementioned meaning and Z is
a radical of the abovementioned formula (2), in which M and R have the abovementioned meanings and X is chlorine; 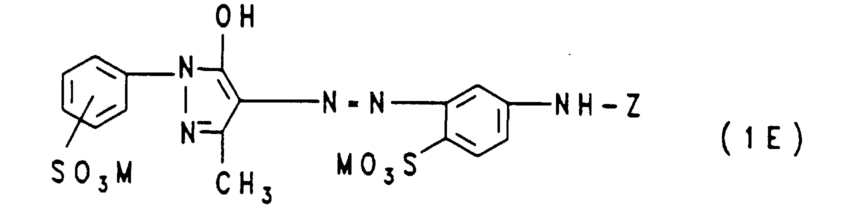 in which M has the abovementioned meaning and Z is a radical of the abovementioned formula (2), in which M and R have the abovementioned meanings and X is fluorine; 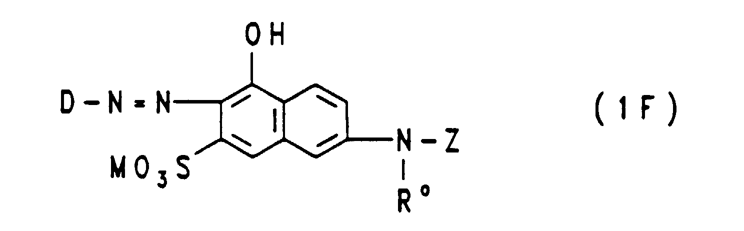 in which
M and Z have the initially mentioned meanings,
D is the 2-sulfophenyl radical which may additionally be substituted by alkyl having 1 to 4 carbon atoms, such as ethyl and, in particular, methyl, or by alkoxy having 1 to 4 carbon atoms, such as ethoxy and, in particular, methoxy, or is a 1-sulfonaphth-2-yl radical which additionally may be substituted by 1 or 2 sulfo groups, and
R⁰ is hydrogen or alkyl having 1 to 4 carbon atoms, such as ethyl and, in particular, methyl; 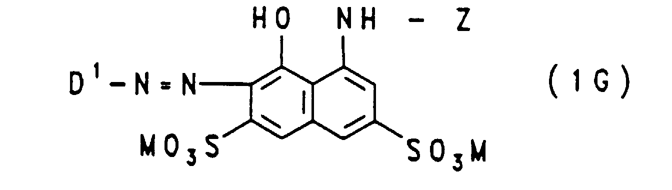 in which
M and Z have the initially mentioned meanings and
D¹ is a 1-sulfonaphth-2-yl radical which may additionally be substituted by 1 or 2 sulfo groups; 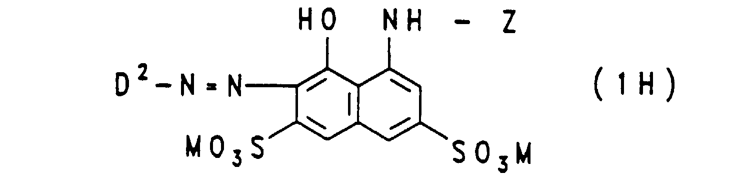 in which
D² is the 2-sulfophenyl radical,
M has the abovementioned meaning, and
Z is a radical of the abovementioned formula (2), in which M and R have the abovementioned meanings and X is chlorine; 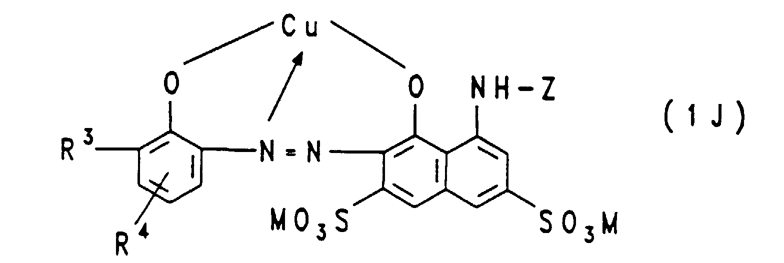 in which
M has the abovementioned meaning,
R³ is hydrogen or chlorine,
R⁴ is hydrogen or sulfo and
Z is a radical of the abovementioned formula (2), in which M and R have the abovementioned meanings and X is chlorine; 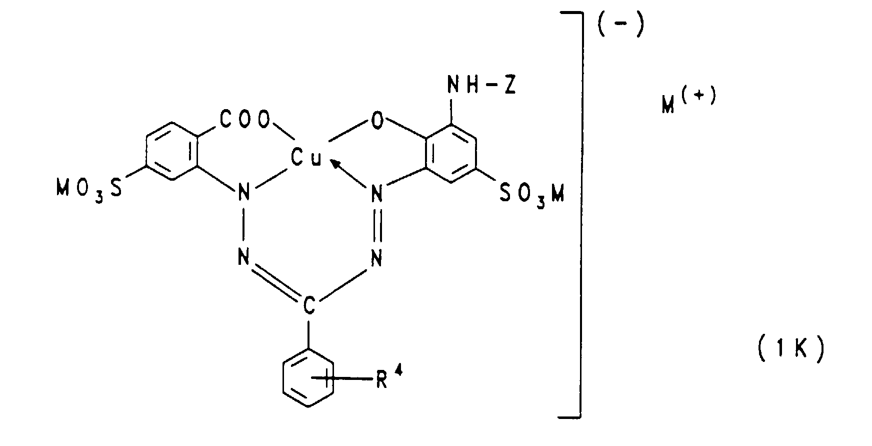 in which M and Z have the initially mentioned meanings and R⁴ is hydrogen or sulfo; 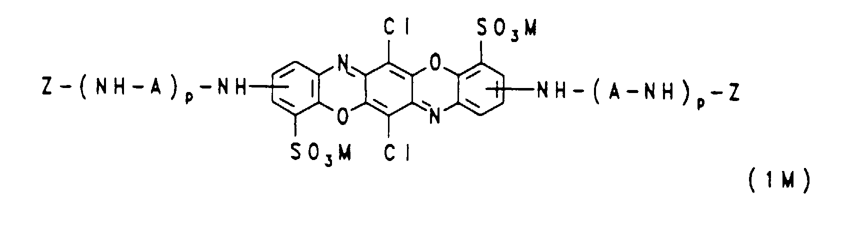 in which
M and Z have the abovementioned meanings,
A is alkylene having 2 to 6 carbon atoms, preferably having 2 to 4 carbon atoms, such as 1,2-ethylene and 1,3-propylene, and
p is zero or 1; 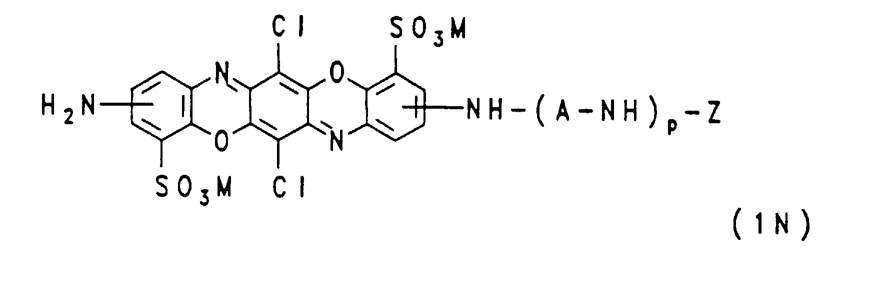 in which
M, A and p have the abovementioned meanings and
Z is a radical of the abovementioned formula (2), in which M and R have the abovementioned meanings and X is fluorine.

2. A dye as claimed in claim 1, wherein R⁰ is hydrogen.

3. A dye as claimed in claim 1 or 2, wherein R is hydrogen.

4. A dye as claimed in claim 1 of the formula 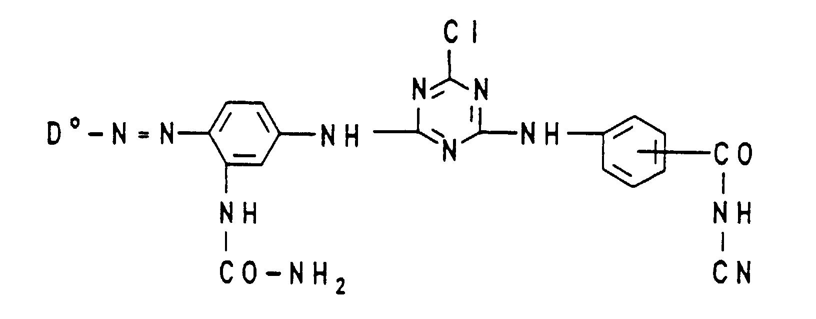 in which M has the meaning given in claim 1, D⁰ is monosulfo-, disulfo- or trisulfonaphth-2-yl, and the cyanoaminocarbonyl group is attached to the benzene ring in the meta or para position relative to the amino group.

5. A dye as claimed in claim 1 of the formula 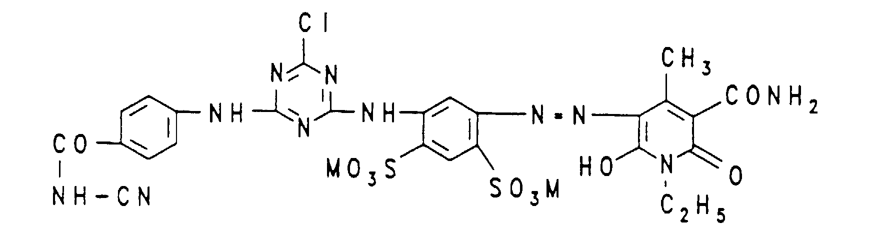 in which M has the meaning given in claim 1.

6. A process for preparing a dye of the formula (1) of claim 1 which comprises reacting precursors typical of the particular dye, at least one of which contains a group of the formula -N(R⁰)-Z with the meanings given in claim 1, with one another by repeating known synthesis routes characteristic of the particular class of dyes, or reacting a halotriazine compound of the formula (21) 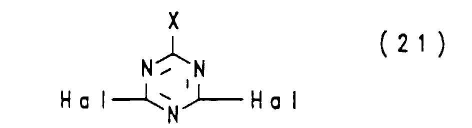 in which Hal is halogen and X has the meaning given in claim 1 with an amino-containing starting compound of the formula (20) 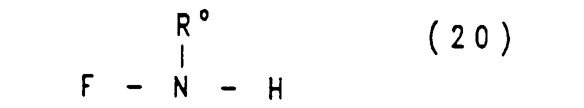 in which F-N(R⁰)- has the meaning of the formula (1), but without the radical Z, and with an amino compound of the formula (22) 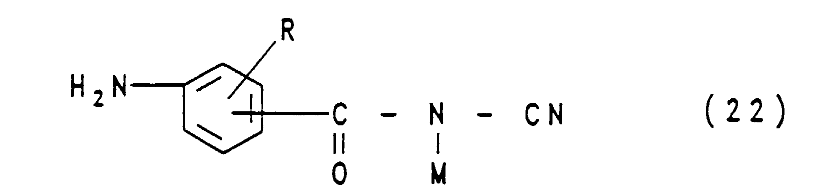 in which R and M have the meanings given in claim 1, in any desired order.

7. Use of a dye as claimed in claim 1 or of a dye prepared as claimed in claim 6 for dyeing (including printing) hydroxyl- and/or carboxamido-containing material, in particular fiber material.

## Revendications

1. Colorant de formule générale (1) 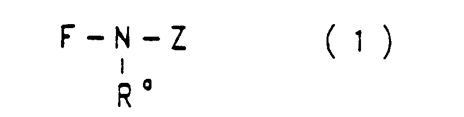 dans laquelle:
F-N(R⁰)-Z est un colorant de formule générale (1A), (1B), (1C), (1D), (1E), (1F), (1G), (1H), (1J), (1K), (1M) ou (1N) 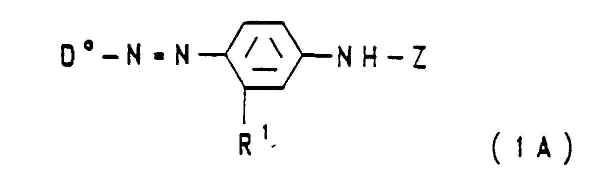 dans laquelle
D⁰ est un monosulfo-, disulfo- ou trisulfonapht-2-yle,
R¹ est un uréido ou un alcanoylamino ayant de 2 à 5 atomes de carbone, tel qu'un propionylamino et en particulier un acétylamino, et
Z est un radical de formule générale (2) 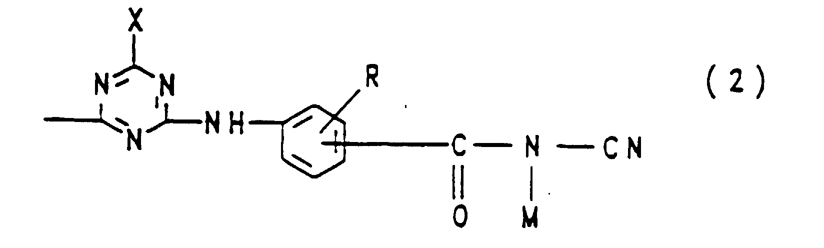 dans laquelle
X désigne un fluor ou un chlore,
R est un hydrogène, un alkyle ayant de 1 à 4 atomes de carbone, tel qu'un éthyle et en particulier un méthyle, ou un alcoxy ayant de 1 à 4 atomes de carbone, tel qu'un éthoxy et en particulier un méthoxy, et
M est un hydrogène ou un métal alcalin, tel que le sodium, le lithium ou le potassium, 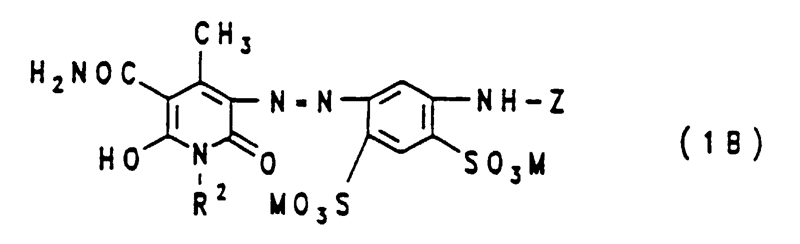 dans laquelle
M et Z sont comme définis ci-dessus, et
R² est un alkyle ayant de 1 à 4 atomes de carbone, en particulier un éthyle; 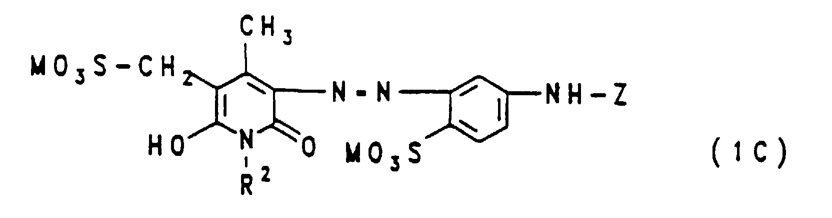 dans laquelle M et R² sont comme définis ci-dessus et Z est un radical de formule générale (2) indiquée ci-dessus, dans laquelle M et R sont comme définis ci-dessus et X désigne un chlore; 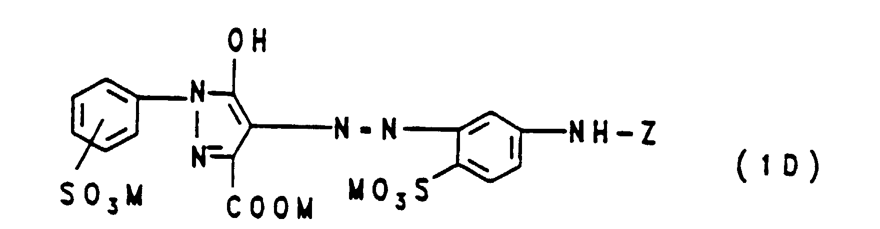 dans laquelle M est comme défini ci-dessus et Z est un radical de formule générale (2) indiquée ci-dessus, dans laquelle M et R sont comme définis ci-dessus et X désigne un chlore; 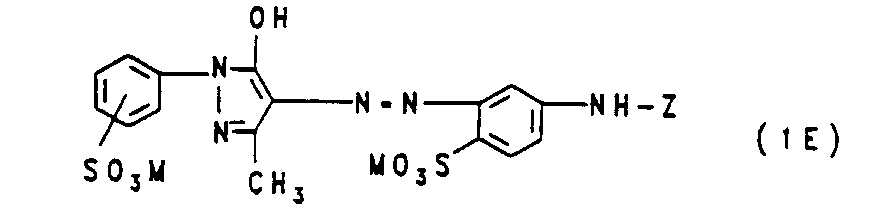 dans laquelle M est comme défini ci-dessus et Z est un radical de formule générale (2) indiquée ci-dessus, dans laquelle M et R sont comme définis ci-dessus et X désigne un fluor; 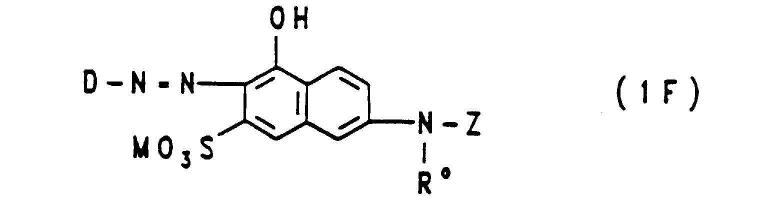 dans laquelle
M et Z sont comme définis au début,
D est le radical 2-sulfophényle, qui peut être encore substitué par un alkyle ayant de 1 à 4 atomes de carbone, tel qu'un éthyle et en particulier un méthyle, ou par un alcoxy ayant de 1 à 4 atomes de carbone, tel qu'un éthoxy et en particulier un méthoxy, ou est un radical 1-sulfonapht-2-yle, qui peut être encore substitué par 1 ou 2 groupes sulfo, et
R° est un hydrogène ou un alkyle ayant de 1 à 4 atomes de carbone, tel qu'un éthyle et en particulier un méthyle; 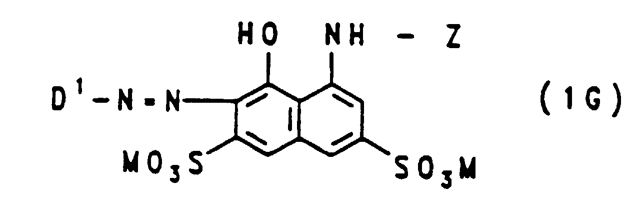 dans laquelle
M et Z sont comme définis au début, et
D¹ est un radical 1-sulfonapht-2-yle, qui peut être encore substitué par 1 ou 2 groupes sulfo; 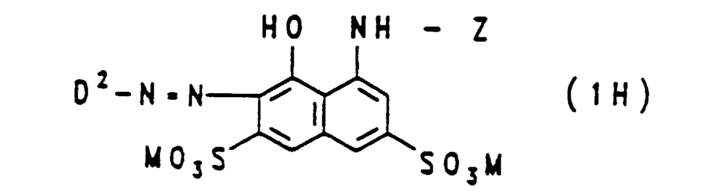 dans laquelle
D² est le radical 2-sulfophényle,
M est comme défini ci-dessus, et
Z est un radical de formule générale (2) indiquée ci-dessus, dans laquelle M et R sont comme définis et X désigne un chlore; 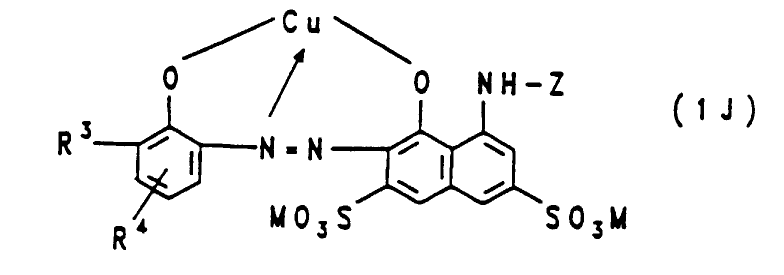 dans laquelle
M est comme défini ci-dessus,
R³ est un hydrogène ou un chlore,
R⁴ est un hydrogène ou un sulfo, et
Z est un radical de formule générale (2) indiquée ci-dessus, dans laquelle M et R sont comme définis et X désigne un chlore; 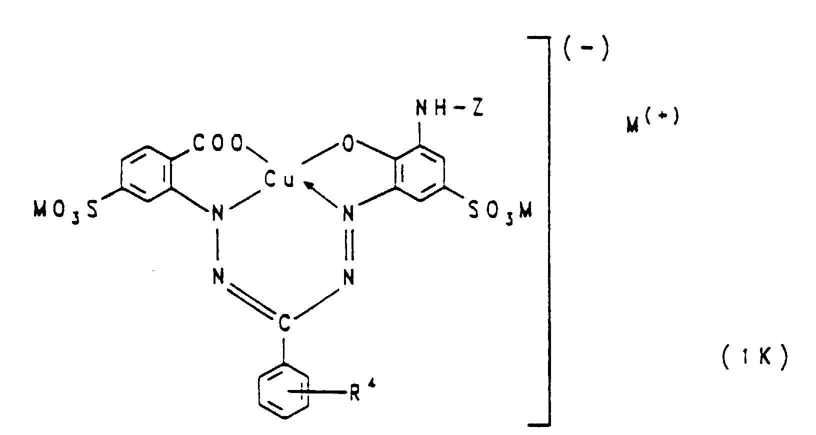 dans laquelle M et Z sont comme définis au début et R⁴ est un hydrogène ou un sulfo; 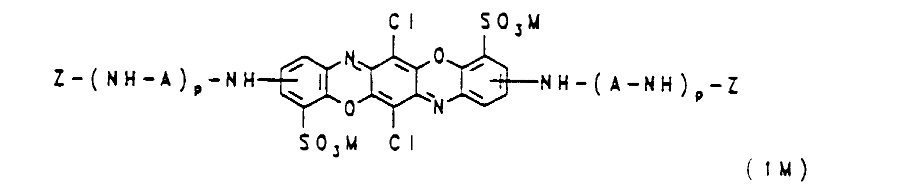 dans laquelle
M et Z sont comme définis ci-dessus,
A est un alkylène ayant de 2 à 6 atomes de carbone, de préférence de 2 à 4 atomes de carbone, tel qu'un 1,2-éthylène et un 1,3-propylène, et
p est le nombre zéro ou 1; 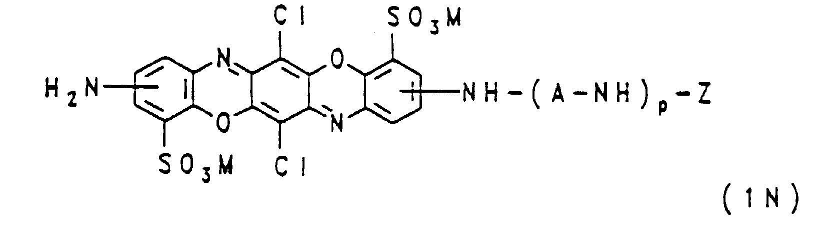 dans laquelle
M, A et p sont comme définis ci-dessus, et
Z est un radical de formule générale (2) indiquée ci-dessus, dans laquelle M et R sont comme définis ci-dessus et X désigne un fluor.

2. Colorant selon la revendication 1, caractérisé en ce que R⁰ est un hydrogène.

3. Colorant selon la revendication 1 ou 2, caractérisé en ce que R est un hydrogène.

4. Colorant selon la revendication 1 de formule générale 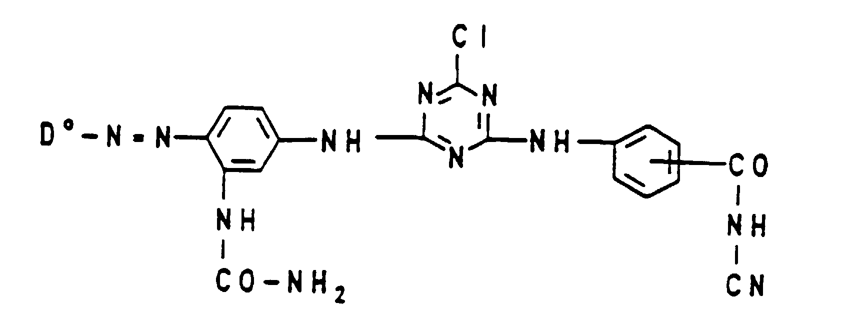 dans laquelle M est comme défini à la revendication 1, D⁰ est un monosulfo-, disulfo- ou trisulfonapht-2-yle et le groupe cyanoaminocarbonyle en position méta ou para par rapport au groupe amino est lié au noyau benzénique.

5. Colorant selon la revendication 1 de formule 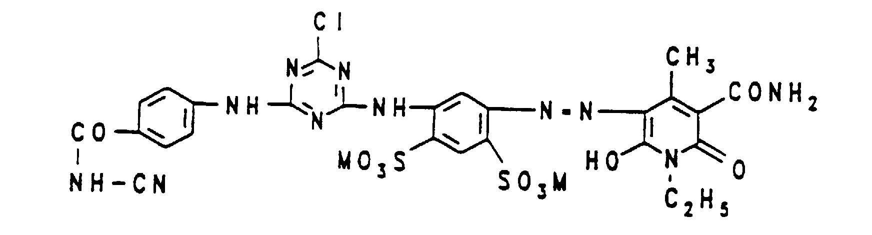 dans laquelle M est comme défini à la revendication 1.

6. Procédé de préparation d'un colorant de formule générale (1) de la revendication 1, caractérisé en ce que l'on fait réagir, de manière similaire à des voies de synthèse connues spécifiques pour chaque classe de colorants, des précurseurs typiques pour chaque colorant, parmi lesquels au moins l'un contient un groupe de formule générale -N(R⁰)-Z comme défini à la revendication 1, ou en ce que l'on fait réagir, dans un ordre quelconque, un composé halogénotriazine de formule générale (21) 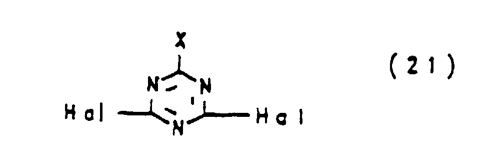 dans laquelle Hal désigne un halogène et X est comme défini à la revendication 1, avec un composé de départ contenant un groupe amino de formule générale (20) 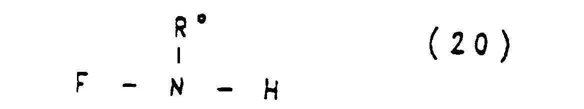 dans laquelle F-N(R⁰)- est comme défini à la formule générale (1) mais toutefois sans radical Z, et avec un composé amino de formule générale (22) 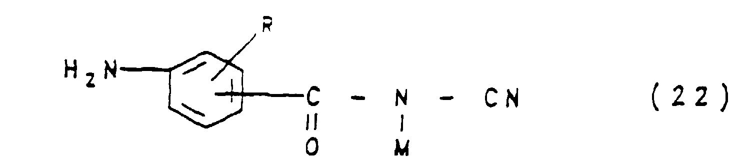 dans laquelle R et M sont comme définis à la revendication 1.

7. Utilisation d'un colorant selon la revendication 1 ou d'un colorant préparé selon la revendication 6 en vue de la coloration (y compris l'impression) d'un matériau contenant des groupes hydroxy et/ou carbonamide, en particulier d'un matériau fibreux.
